# EUROPEAN PATENT SPECIFICATION

(11) **EP 4 331 869 B1**
(45) Date of publication and mention of the grant of the patent: **04.06.2025**
(21) Application number: 23190908.6
(22) Date of filing: 10.08.2023
(51) Int. Cl.: B60C 11/00, B60C 13/00, B60C 11/03, B60C 11/13

(54) **TIRE**
REIFEN
PNEUMATIQUE

(30) Priority: 30.08.2022 JP 2022137336
(43) Date of publication of application: 06.03.2024
(73) Proprietor: Sumitomo Rubber Industries, Ltd., Kobe-shi, Hyogo 651-0072 (JP)
(72) Inventor: YAJIMA, RYO, Kobe-shi, Hyogo, 651-0072 (JP)
(74) Representative: Manitz Finsterwald Patent- und Rechtsanwaltspartnerschaft mbB

(56) References cited:
- EP-A1- 4 008 566
- WO-A1-2022/045078

## Description

### TECHNICAL FIELD

The present invention relates to a tire.

### BACKGROUND OF THE INVENTION

JP 2014-162242 describes that, in a tire comprising a tread part that comprises a cap rubber coming into contact with a road surface and a base rubber located on an inner side in a tire radial direction with respect to the cap rubber, the cap rubber is set as a rubber layer having a relatively high rigidity, the base rubber is set as a rubber layer having a relatively low rigidity, and a thickness of the base rubber is inclined in a tire width direction, thereby decreasing a difference in grounding pressure and improving braking performance.
A tire according to the preamble of claim 1 is disclosed in EP 4 008 566 A1. A further tire is described in WO 2022/045078 A1.

### SUMMARY OF THE INVENTION

However, the tire described in JP 2014-162242 A easily loses followability to a road surface due to the cap rubber having relatively high rigidity. Moreover, since the tire of JP 2014-162242 A cannot generate a sufficient reaction force due to the low rigidity of the base rubber, there is a room for improvement of steering stability on a wet road surface.

It is an object of the present invention to maintain steering stability of a tire on a wet road surface over a long period of time.

The present invention relates to:
a tire comprising
a tread part comprising at least one rubber layer, and
a sidewall,
wherein each of the tread part and the sidewall is composed of a rubber composition comprising a rubber component and a vegetable oil,
wherein, when an average value of contents of the vegetable oil based on 100 parts by mass of the rubber component in a tread rubber constituting the tread part is defined as S1, in part by mass, and a content of the vegetable oil based on 100 parts by mass of the rubber component in the rubber composition constituting the sidewall is defined as S2, in part by mass, S1/S2 is greater than 1.0, and
wherein, when a complex elastic modulus at 30°C of a cap rubber layer constituting a tread surface is defined as 30°CE_{*C}, in MPa, and a complex elastic modulus at 70°C of the rubber composition constituting the sidewall is defined as 70°CE_{*SW}, in MPa, 30°CE_{*C} - 70°CE_{*SW} is 3.0 MPa or less.

According to the present invention, steering stability of a tire on a wet road surface can be maintained over a long period of time.

### BRIEF DESCRIPTION OF THE DRAWINGS

FIG. 1 a cross-sectional view of one example of a tire according to one embodiment of the present invention.
FIG. 2 is an enlarged plane view of a main groove according to one embodiment of the present invention.
FIG. 3 is a cross-sectional view along an A-A line of FIG. 2.
FIG. 4 is an enlarged plane view of another main groove according to the present invention.
FIG. 5 shows (a) a cross-sectional view along a B-B line of FIG. 4 and (b) a cross-sectional view along a C-C line of FIG. 4.

### DETAILED DESCRIPTION

The tire that is one embodiment of the present invention is a tire comprising a tread part comprising at least one rubber layer, and a sidewall, wherein each of the tread part and the sidewall is composed of a rubber composition comprising a rubber component and a vegetable oil, wherein, when an average value of contents of the vegetable oil based on 100 parts by mass of the rubber component in a tread rubber constituting the tread part is defined as S1, in part by mass, and a content of the vegetable oil based on 100 parts by mass of the rubber component in the rubber composition constituting the sidewall is defined as S2, in part by mass, S1/S2 is greater than 1.0, and wherein, when a complex elastic modulus at 30°C of a cap rubber layer constituting a tread surface is defined as 30°CE_{*C}, in MPa, and a complex elastic modulus at 70°C of the rubber composition constituting the sidewall is defined as 70°CE_{*SW}, in MPa, 30°CE_{*C} - 70°CE_{*SW} is 3.0 MPa or less

The reason why the tire according to the present embodiment can maintain steering stability on a wet road surface over a long period of time is considered as follows, although the following consideration is not intended to be bound by any theory.

When a vegetable oil is compounded in a tread rubber and a sidewall rubber and an average value of a contents of a vegetable oil based on 100 parts by mass of a rubber component in a tread rubber is greater than a content of a vegetable oil based on 100 parts by mass of a rubber component of a rubber composition constituting a sidewall, followability of the tread rubber to a road surface is easily obtained, an appropriate rigidity of the sidewall is secured, and it is considered that responsiveness can be improved. Moreover, since vegetable oils are characterized in that, among softening agents for rubber processing, it is difficult for the vegetable oils to move in a rubber, movement of the softening agent from the tread rubber to the sidewall can be suppressed. For this reason, it becomes difficult for the tread part to harden, and it becomes difficult for the sidewall rubber to soften, so that the followability of the tread part to a road surface is maintained over time, and it is considered that the rigidity of the sidewall part is also easily secured.

Moreover, when a difference in rigidity between the tread rubber and the sidewall rubber is reduced, the tread part and the sidewall part deform uniformly during turning, and the entire region from the tread part to the sidewall twists, so that it is considered that it becomes easy for the tire to generate a reaction force.

Additionally, with cooperation of these features, it is considered that a state in which the tire easily generates a reaction force while maintaining the followability of the tread part to a road surface is preserved, so that it is considered that a remarkable effect of maintaining steering stability of the tire on a wet road surface over a long period of time is achieved.

A content S2 of the vegetable oil based on 100 parts by mass of the rubber component of in rubber composition constituting the sidewall is preferably 5.0 parts by mass or less.

When S2 is within the above-described range, the rigidity of the sidewall part is increased, and it is considered that a reaction force can be easily generated.

When tan δ at 30°C of the cap rubber layer is defined as 30°C tan δc, 30°C tan δc is preferably 0.13 or less.

When 30°C tan δc is within the above-described range, heat generation during running is reduced, and it is considered that hardening of the cap rubber layer over time is suppressed.

When tan δ at 70°C of the rubber composition constituting the sidewall is defined as 70°C tan δ_{SW}, 70°C tan δ_{SW} is preferably 0.06 or less.

When 70°C tan δ_{SW} is within the above-described range, it becomes easy for the sidewall part to return to its original state when the sidewall part deforms so as to twist during turning, the responsiveness is improved, and it is considered that the steering stability on a wet road surface over a long period of time can be easily improved.

30°CE_{*C} is preferably 5.0 MPa or more.

When 30°CE_{*C} is within the above-described range, it becomes easy for the tread part to exert a restoring force with respect to deformation after the tread part follows a road surface, and it is considered that the responsiveness can be easily improved.

A glass transition temperature of the cap rubber layer is preferably -25°C or higher.

A slip occurs between a tread rubber surface and a wet road surface on the wet road surface, and it is considered that energy loss at a low temperature rather than a normal temperature contributes to grip performance of the tread rubber surface due to the slip. For this reason, when the glass transition temperature of the cap rubber layer is set to -25°C or higher, energy loss at a low temperature rather than a normal temperature can be easily improved, grip performance on the tread surface is improved, and it is considered that it becomes easy to exert effects of the present invention.

A Shore hardness (Hs) of the cap rubber layer is preferably 40 or more and 70 or less.

When the Shore hardness of the cap rubber layer is within the above-described range, it is considered that steering stability and wet grip performance can be maintained.

When a total thickness of the tread part is defined as t, in mm, a product (30°C tan δ_{C} × t) of tan δ at 30°C (30°C tan δ_{C}) of the cap rubber layer and t is preferably 1.50 or less.

The thicker the thickness of the tread part is, the more easily heat accumulation in the tread part occurs during running, and it is considered that it becomes easy to draw hardening of the tread part. Moreover, the greater the 30°C tan δ_{C} is, the more easily heat generation occurs due to a rolling motion during running, and it is considered that hardening of the entire tread part is easily drawn. For this reason, when the product of these values is equal to or less than a certain value, heat generation and heat accumulation in the tread part can be suppressed, and suppression of hardening of the tread part becomes easier, so that it is considered that it becomes easy to exert the effects of the present invention.

A difference between an average value of amounts of acetone extraction for the tread rubber and an amount of acetone extraction for the rubber composition constituting the sidewall (average value of amounts of acetone extraction for tread rubber - amount of acetone extraction for rubber composition constituting sidewall) is preferably 5.0% by mass or more.

When the average value of the amounts of acetone extraction for the tread rubber and the amount of acetone extraction for the rubber composition constituting the sidewall are within the above-described range, diffusion of the softening agent from the tread rubber to the sidewall rubber can be controlled adequately. For this reason, it is considered that a change in hardness of the cap rubber layer due to the use of the tire can be controlled adequately.

An average value of ash contents of the tread rubber is preferably 7.5% by mass or more.

When the average value of the ash contents of the tread rubber is within the above-described range, the softening agent is adsorbed due to the ash components, movement of the softening agent from the tread rubber to the sidewall rubber can be suppressed, and it is considered that the hardening effect of the tread rubber over time can be suppressed.

A total styrene amount in the rubber component constituting the cap rubber layer is preferably 3% by mass or more and 15% by mass or less.

When the total styrene amount in the rubber component constituting the cap rubber layer is within the above-described range, a domain by styrene part is generated in the cap rubber layer, and it is considered that a scratch effect on a road surface is easily obtained due to this domain of styrene part. Moreover, since the styrene part has a bulky structure, movement of the softening agent in the rubber is easily prevented, and it is considered that the effects of the present invention can be easily exerted.

The tread part comprises a circumferential groove continuously extending in a tire circumferential direction, where a groove wall of at least one circumferential groove has a recessed part that is recessed outward in a groove width direction from a groove edge appearing on a grounding face of the tread part, and a total amount of recession of the at least one circumferential groove relative to a groove width of the at least one circumferential groove is preferably 0.10 to 0.90.

When an area of an opening of the circumferential groove is increased as the tread part abrades, it is considered that steering stability on a wet road surface is maintained over a long period of time.

It is preferable that a first groove wall that is one groove wall of the circumferential groove has a first recessed part that is recessed outward in the groove width direction from a groove edge appearing on the grounding face of the tread part and in which an amount of recession of the first recessed part from the groove edge is gradually decreased toward both sides of the tire circumferential direction from the deepest part that is recessed most outward in the groove width direction. Moreover, it is preferable that the first groove wall further has a second recessed part that is recessed outward in the groove width direction from the groove edge appearing on the grounding face of the tread part and in which an amount of recession of the second recessed part from the groove edge is constant in the tire circumferential direction.

When at least one groove wall of the circumferential groove is provided with a recessed part as described above, it is considered that steering stability and wet performance are improved with good balance.

### <Definition>

A "standardized rim" is a rim defined for each tire in a standard system including a standard, on which the tire is based, by the standard and refers to, for example, a "standard rim" in JATMA, "Design Rim" in TRA, or "Measuring Rim" in ETRTO. JATMA, ETRTO, and TRA are referred to in this order, and when an applicable size is found during reference to the standard, a standardized rim is based on that standard.

The "cap rubber layer" refers to a rubber layer that is on the outermost surface of the tread part and that has a thickness of 2 mm or more.

The "total thickness of the tread part" refers to a thickness of the entire tread part on a tire equatorial plane on a cross-section obtained by cutting the tire along a surface including a tire rotation axis. Besides, an end on the inner side in the tire radial direction in the thickness of the entire tread part is an interface of the rubber composition of the tread part on the inner side in the tire radial direction, and in a case where the tire comprises a belt reinforcement layer, a belt layer, and a carcass layer, among them, the total thickness of the tread part becomes a thickness of the entire rubber layer on an outer side in the tire radial direction with respect to a layer on the outermost side in the tire radial direction. Moreover, in a case where a circumferential groove is provided on the tire equatorial plane, the total thickness of the tread part is a thickness of the entire tread part ranging from a point of intersection between a straight line connecting ends of the tread surface in the tire width direction on the tire equatorial plane and the tire equatorial plane.

A "thickness of each rubber layer constituting the tread part" refers to a thickness of each rubber layer on the tire equatorial plane on the cross-section obtained by cutting the tire along the surface including the tire rotation axis. For example, a thickness of a first layer refers to a direct distance in the tire radial direction from the outermost surface of the tread to an interface of the first layer on the inner side in the tire radial direction on the tire equatorial plane. Besides, in a case where a circumferential groove is provided on the tire equatorial plane, the thickness of each rubber layer constituting the tread part is defined as a thickness of each rubber layer in a central part of a land part nearest to the tire equatorial plane in the tire width direction. The "land part nearest to the tire equatorial plane" refers to a land part having a groove edge of circumferential groove existing on the tire equatorial plane, the groove edge being nearest to the tire equatorial plane. In a case where such land parts exist on both lateral sides in the tire width direction, the thickness of each rubber layer constituting the tread part is defined as an average value of thicknesses of respective rubber layers in the central parts of the two land parts in the tire width direction. Moreover, in a case where an electrically-conductive member or the like exists in a land part on the tire equatorial plane and thus an interface is unclear, measurement shall be made by virtually jointing interfaces blocked by the electrically-conductive member or the like.

The "average value of contents of the vegetable oil based on 100 parts by mass of the rubber component of the tread rubber" is a value obtained by calculating values each obtained by multiplying the content (part by mass) of the vegetable oil based on 100 parts by mass of the rubber component by a ratio of the thickness of each rubber layer to the total thickness of the tread part for each rubber layer constituting the tread part and by summing up these values. Specifically, it is calculated by Σ (content (part by mass) of vegetable oil based on 100 parts by mass of rubber component of each rubber layer × thickness of each rubber layer to total thickness of tread part (%)/100).

An "average value of amounts of acetone extraction for the tread rubber" is a value obtained by calculating values each obtained by multiplying an amount of acetone extraction (% by mass) by a ratio of the thickness of each rubber layer to the total thickness of the tread part for each rubber layer constituting the tread part and by summing up these values. Specifically, it is calculated by Σ (amount (% by mass) of acetone extraction for each rubber layer × thickness of each rubber layer to total thickness of tread part (%)/100).

An "average value of ash contents of the tread rubber" is a value obtained by calculating values each obtained by multiplying an ash content (% by mass) by a ratio of the thickness of each rubber layer to the total thickness of the tread part for each rubber layer constituting the tread part and by summing up these values. Specifically, it is calculated by Σ (ash content (% by mass) of each rubber layer × thickness of each rubber layer to total thickness of tread part (%)/100).

The "softening agent" is a material giving the rubber component plasticity and is a component extracted from the rubber composition using acetone. Examples of the softening agent include a softening agent that is a liquid (in a liquid state) at 25°C and a softening agent that is a solid at 25°C. However, the softening agent shall not comprise wax and stearic acid commonly used in the tire industry.

A "content of the softening agent" also includes an amount of a softening agent contained in an extended rubber component previously extended with the softening agent such as oil, a resin component, and a liquid rubber component. Moreover, the same applies to a content of oil, a content of a resin component, and a content of a liquid rubber, and for example, in a case where an extending component is oil, the extending oil is included in the content of oil.

### <Measuring method>

The "total thickness of the tread part" and the "thickness of each layer of the tread part" are measured in a state in which a width of a bead part is made to conform to a width of a standardized rim after cutting the tire along the surface including the tire rotation axis.

The "amount of acetone extraction" can be obtained by immersing each vulcanized rubber test piece in acetone for 72 hours in accordance with JIS K 6229:2015 to extract a soluble component, measuring a mass of each test piece before and after the extraction, and using the following equation. In a case where each test piece is prepared by being cut out of the tire, each test piece is cut out of the tread part of the tire such that the tire circumferential direction becomes a long side and the tire radial direction becomes a thickness direction. (amount of acetone extraction (% by mass)) = {(mass of rubber test piece before extraction - mass of rubber test piece after extraction)/(mass of rubber test piece before extraction)} × 100

The "ash content (% by mass)" indicates a ratio of total mass of a noncombustible component (ash component) in the rubber composition to total mass of the rubber composition and is obtained by the following method. A vulcanized rubber test piece cut out of a tread of each test tire is put into a crucible made of alumina, the crucible is heated in an electric furnace at 550°C for 4 hours, and a mass of the vulcanized rubber test piece after being subjected to heating is measured. The "ash content (% by mass)" in the rubber composition can be calculated using the mass of the vulcanized rubber test piece after being subjected to heating when a mass percentage of the vulcanized rubber test piece before being subjected to heating is defined as 100% by mass.

The "30°CE*" is a complex elastic modulus measured using a dynamic viscoelasticity measuring apparatus (for example, EPLEXOR series manufactured by gabo Systemtechnik GmbH) under a condition of a temperature at 30°C, a frequency of 10 Hz, an initial strain of 5%, a dynamic strain of 1%, and an extension mode. A sample for measurement of 30°CE_{*} is a vulcanized rubber composition having a length of 20 mm, a width of 4 mm, and a thickness of 1 mm. In a case where the sample is prepared by being cut out of a tire, the sample is cut out of the tread part such that the tire circumferential direction becomes a long side and the tire radial direction becomes a thickness direction.

The "70°CE_{*}" is a complex elastic modulus measured using a dynamic viscoelasticity measuring apparatus (for example, EPLEXOR series manufactured by gabo Systemtechnik GmbH) under a condition of a temperature at 70°C, a frequency of 10 Hz, an initial strain of 10%, a dynamic strain of 1%, and an extension mode. In a case where a sample is prepared by being cut out of a tire, the sample is cut out of a sidewall such that a tangent line in the tire circumferential direction becomes a long side and the tire width direction (a direction of the normal line to a sidewall surface) becomes a thickness direction.

The "30°C tan δ" is a loss tangent measured using a dynamic viscoelasticity measuring apparatus (for example, EPLEXOR series manufactured by gabo Systemtechnik GmbH) under a condition of a temperature at 30°C, a frequency of 10 Hz, an initial strain of 5%, a dynamic strain of 1%, and an extension mode. A sample for measurement of 30°C tan δ is prepared in the same manner as in the case of 30°CE_{*}.

The "70°C tan δ" is a loss tangent measured using a dynamic viscoelasticity measuring apparatus (for example, EPLEXOR series manufactured by gabo Systemtechnik GmbH) under a condition of a temperature at 70°C, a frequency of 10 Hz, an initial strain of 10%, a dynamic strain of 1%, and an extension mode. A sample for measurement of 70°C tan δ is prepared in the same manner as in the case of 70°CE*.

The "Shore hardness" is a Shore hardness (Hs) measured at 23°C in accordance with JIS K 6253-3:2012 using a type-A durometer. A sample for measurement of Shore hardness is prepared by being cut out of the tread part such that the tire radial direction becomes a thickness direction. Moreover, the measurement is performed by pressing a measuring instrument against the sample from the grounding-surface side of the sample for measurement of the hardness.

For the "Tg of the rubber composition", a temperature distribution curve of tan δ in a range from -60°C to 40°C is measured using a dynamic viscoelasticity measuring apparatus (for example, EPLEXOR series manufactured by gabo Systemtechnik GmbH) under a condition of a frequency of 10 Hz, an initial strain of 10%, an amplitude of ±0.5%, and a temperature rising rate of 2°C/min, and a temperature (tan δ peak temperature) corresponding to the largest value of tan δ in the obtained temperature distribution curve is determined as Tg. In a case where two points at which tan δ has the largest value exist in the range from -60°C to 40°C, one of the two points that is on the lower temperature side than the other is determined as Tg. Moreover, in a case where a temperature distribution curve in which tan δ gradually decreases with an increase of temperature is obtained in the range from -60°C to 40°C, Tg is defined as -60°C from the above-described definition. A sample for measurement of Tg is prepared in the same manner as in the case of 30°CE_{*}.

The above-described physical property values and relational expressions for the present invention indicate values and relations for a tire that is in a state just after produced or for a tire in a state within one year just after produced and in mint and unused condition.

A "styrene content" is a value calculated by ¹H-NMR measurement and is applied to a rubber component (styrene unit-comprising rubber) having a repeating unit derived from styrene such as, for example, a SBR. A "vinyl content (1,2-bond butadiene unit amount)" is a value calculated in accordance with JIS K 6239-2:2017 by an infrared absorption spectrometry and is applied to a rubber component having a repeating unit derived from butadiene such as, for example, a SBR, and a BR. A "cis content (cis-1,4-bond butadiene unit amount)" is a value calculated in accordance with JIS K 6239-2:2017 by the infrared absorption spectrometry and is applied to a rubber component having a repeating unit derived from butadiene such as, for example, a BR.

The "total styrene amount in the rubber component" is a total content (% by mass) of styrene units included in 100% by mass of the rubber component and is a value obtained by calculating a value obtained by multiplying the styrene content (% by mass) by a mass fraction in the rubber component for each rubber component and summing up these values. Specifically, the total styrene amount in the rubber component is calculated by Σ (styrene content (% by mass) of each styrene unit-comprising rubber × content (% by mass) in rubber component, of each styrene unit-comprising rubber / 100).

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). The Mw is applied to, for example, SBR, BR, a softening agent, and the like.

A "nitrogen adsorption specific surface area (N₂SA) of carbon black" is measured according to JIS K 6217-2:2017. A "nitrogen adsorption specific surface area (N₂SA) of silica" is measured by a BET method according to ASTM D3037-93.

A procedure for producing a tire that is one embodiment of the present invention will be described below in detail. However, the following descriptions are illustrative for explaining the present invention and are not intended to limit the technical scope of the present invention to this description range only.

### [Tire]

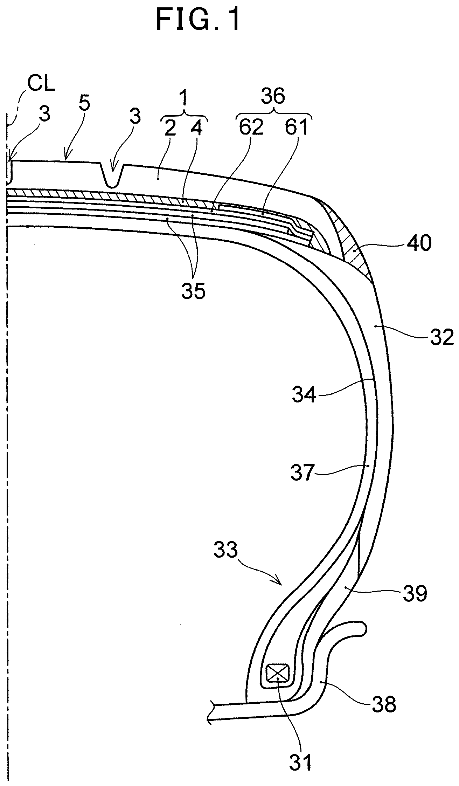

Although FIG. 1 is a cross-sectional view showing a part of a tread of a tire according to the present embodiment, the present invention is not limited to such an aspect. The tire in FIG. 1 is configured to comprise a tread part 1, a sidewall 32, a bead part 33, a carcass 34, a belt layer 35, a belt reinforcement layer 36, an inner liner 37, a rim 38, a clinch 39, and a wing 40. The bead part 33 comprises a bead core 31. The belt layer 35 is stacked in two layers, and a belt reinforcement layer 36 having a jointless structure is arranged between a base rubber layer 4 and the belt layer 35. The belt reinforcement layer 36 consists of an edge band 61 covering only an edge part of the belt layer 35 and a full band 62 covering the entire area of the belt layer 35.

The tread part of the tire according to the present embodiment comprises at least one rubber layer. The tread part according to the present embodiment may be composed of a single rubber layer or may comprise two or more rubber layers, and it is preferable that the tread part comprises two or more rubber layers. Although a configuration of the rubber layer is not particularly limited, for example, it has the base rubber layer 4 adjacent to the outside of the belt reinforcement layer 36 (belt layer 35 when the belt reinforcement layer does not exist) in the tire radial direction, and a cap rubber layer 2 constituting a tread surface 5. Moreover, the tread part may further comprise one or more intermediate rubber layers between the cap rubber layer 2 and the base rubber layer 4.

In the present embodiment, a total thickness of the tread part 1 is, but not particularly limited to, preferably 30 mm or less, more preferably 25 mm or less, further preferably 20 mm or less, particularly preferably 15 mm or less. Moreover, the total thickness of the tread part 1 is preferably 3.0 mm or more, more preferably 5.0 mm or more, further preferably 7.0 mm or more, particularly preferably 9.0 mm or more.

A thickness of the cap rubber layer 2 relative to the total thickness of the tread part 1 is preferably 20% or more, more preferably 30% or more, further preferably 40% or more, further preferably 50% or more, particularly preferably 60% or more, from the viewpoint of the effects of the present invention. On the other hand, an upper limit value of the thickness of the cap rubber layer 2 relative to the total thickness of the tread part 1 can be, but not particularly limited to, for example, 100%, 99% or less, 95% or less, 90% or less, 85% or less, or 80% or less.

A thickness of the base rubber layer 4 when present relative to the total thickness of the tread part 1 is preferably 1% or more, more preferably 5% or more, further preferably 10% or more, further preferably 15% or more, particularly preferably 20% or more, from the viewpoint of the effects of the present invention. On the other hand, the thickness of the base rubber layer 4 relative to the total thickness of the tread part 1 is preferably 80% or less, more preferably 70% or less, further preferably 60% or less, further preferably 50% or less, particularly preferably 40% or less.

In the tire according to the present embodiment, the groove wall of at least one circumferential groove 3 is preferably provided with a recessed part that is recessed outward in a groove width direction from a groove edge 6 appearing on a grounding face of the tread part 1.

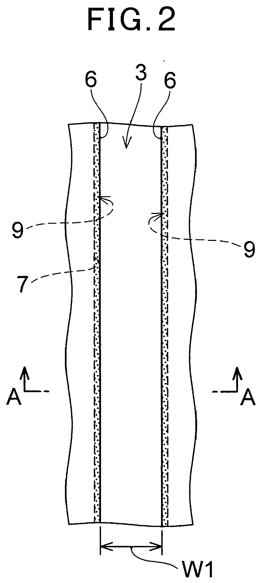

FIG. 2 shows an enlarged plane view of the circumferential groove 3 according to the present embodiment. In FIG. 2, groove edges 6 of the circumferential groove 3 are depicted with solid lines, and a profile 7 of the groove wall in a case where the tread part 2 is viewed in a plane view is depicted with a broken line. Moreover, a recessed area between a groove edge 6 and the profile 7 of the groove wall of the circumferential groove 3 is colored.

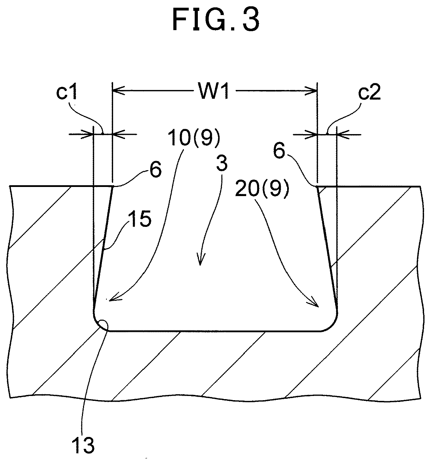

FIG. 3 shows an A-A line cross-sectional view of the circumferential groove 3 shown in FIG. 2. As shown in FIG. 3, the groove walls on both sides of the circumferential groove 3 are provided with recessed parts 9 whose amount of recession is constant in the tire circumferential direction. For example, in the recessed parts 9, a plane 15 is formed between a deepest part 13 of the recessed part and a groove edge 6. However, the present invention is not limited to such an aspect.

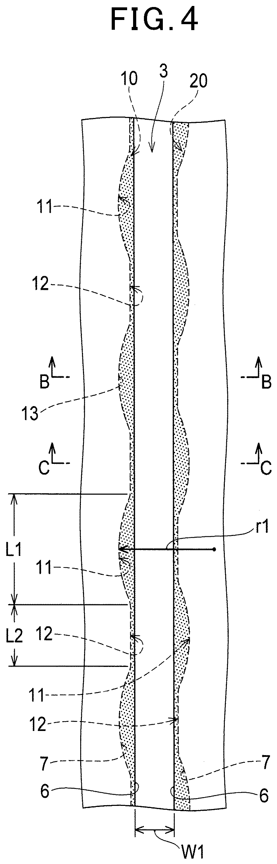

FIG. 4 shows an enlarged plane view of another circumferential groove 3 according to the present embodiment. As shown in FIG. 4, a first groove wall 10 that is one of the groove walls of the circumferential groove 3 is provided with at least one first recessed part 11.

In FIG. 4, the groove wall 6 of the circumferential groove 3 is depicted with a solid line, and the profile 7 of the groove wall in a case where the tread part 2 is viewed in a plane view is depicted with a broken line. Moreover, the recessed area between the groove edge 6 and the profile 7 of the groove wall of the circumferential groove 3 is colored. The first recessed part 11 is recessed outward in a groove width direction from a groove edge 6 appearing on a grounding surface of the tread part 2. Since, in the first recessed part 11, an area of an opening of the circumferential groove 3 is increased as the tread part 2 abrades, a good wet performance is exerted over a long period of time.

An amount of recession of the first recessed part 11 from the groove edge 6 is gradually decreased toward the both sides of the tire circumferential direction from the deepest part 13 that is recessed most outward in the groove width direction. As a result, rigidity of a land part partitioned by the above-described circumferential groove 3 is secured on the both sides of the deepest part 13 in the tire circumferential direction, and a groove edge lateral part 8 (shown in FIG. 3) of the land part can be suppressed from falling down to the groove-center side of the circumferential groove 3. Moreover, since the first recessed part 11 smoothly changes the rigidity of the land part in the tire circumferential direction, local deformation of the groove edge lateral part 8 is suppressed. Accordingly, a good steering stability is obtained.

In general, a circumferential groove extending continuously in the tire circumferential direction discharges water backward in a movement direction of a tire during wet running. However, in a case where there is a large amount of water on a road surface, the circumferential groove tends to shove some water forward in the movement direction of the tire. The circumferential grooves 3 according to the present embodiment can shove some water forward in the movement direction of the tire and outward in a tire axial direction by the first recessed part 11 and furthermore suppresses the shoved water from entering a space between the tread part 2 and a road surface. Moreover, since a groove area becomes large as the tread part abrades, a reduction of the groove volume following the progress of abrasion can be delayed as compared with a conventional groove.

It is preferable that the curvature of the first recessed part 11 for the arc-shaped profile part 7 on the cross-section along the grounding face of the tread part 2 is gradually increased toward the inside in the tire radial direction. In such a first recessed part 11, a large groove volume of the circumferential groove 3 can be secured while suppressing deformation of the groove edge lateral part 8.

A radius r1 of curvature of the profile part 7 is preferably 1.5 to 3.0 times as much as a groove width W1. Moreover, a length L1 of the first recessed part 11 in the tire circumferential direction is preferably 2.0 to 3.0 times as much as the groove width W1 of the circumferential groove 3.

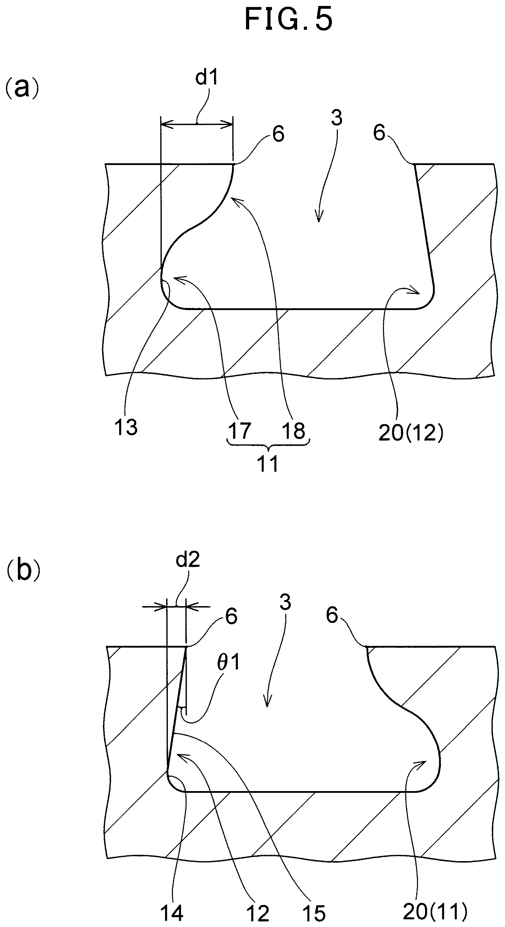

FIG. 5(a) is a B-B line cross-sectional view of FIG. 4 and corresponds to a cross-sectional view of a groove passing though the deepest part 13 of the first recessed part 11 provided on the first groove wall 10. As shown in FIG. 5(a), the first recessed part 11 is preferably provided on the groove-bottom side of the groove wall of the circumferential groove 3.

For example, the first recessed part 11 according to the present embodiment preferably comprises a recessed surface part 17 that is recessed outward in the groove width direction, and a convex surface part 18 that connects with the outside of the recessed surface part 17 in the tire radial direction and that is convex on the groove-center-line side of the circumferential groove 3. Each of the recessed surface part 17 and the convex surface part 18 is preferably curved in a shape of a smooth arc. However, the first recessed part 11 is not limited to such an aspect and may be, for example, a part in which a plane is formed between the deepest part 13 and the groove edge 6.

It is preferable that an amount of recession of the first recessed part 11 is gradually decreased toward the outside in the tire radial direction from the deepest part 13 on the cross section of the groove passing through the deepest part 13. In order to secure the groove volume of the circumferential groove 3, an amount d1 of recession from the groove edge 6 to the deepest part 13 is preferably 0.10 times or more, more preferable 0.20 times or more, further preferable 0.30 times or more as much as the groove width W1, the groove width W1 being a length between the groove edges of the circumferential groove 3. Moreover, the amount d1 of recession is, but not particularly limited to, preferably 0.50 times or less as much as the groove width W1, from the viewpoint of the purpose of easily removing, from the tread part, a rib of a vulcanization mold used for formation of circumferential grooves.

As shown in FIG. 4, it is preferable that the first groove wall 10 is further provided with at least one second recessed part 12. In a preferred aspect, the first groove wall 10 is provided with a plurality of second recessed parts 12. In a more preferred aspect, the first groove wall 10 according to the present embodiment is provided with the first recessed parts 11 and the second recessed parts 12 such that the first recessed parts alternate with the second recessed parts in the tire circumferential direction. The second recessed part 12 is recessed outward in the groove width direction from the groove edge 6, and an amount of recession of the second recessed part from the groove edge 6 is constant in the tire circumferential direction.

For example, the second recessed part 12 preferably has a length in the tire circumferential direction that is smaller than that of the first recessed part 11. For example, a length L2 of the second recessed part 12 in the tire circumferential direction is preferably 0.45 to 0.60 times as much as the length L1 of the first recessed part 11 in the tire circumferential direction. Such a second recessed part 12 can improve steering stability and wet performance with good balance.

FIG. 5(b) is a C-C line cross-sectional view of FIG. 4 and corresponds to a cross-sectional view of a groove passing through the second recessed part 12 provided on the first groove wall 10. As shown in FIG. 5(b), in the second recessed part 12, for example, a plane 15 is formed between a deepest part 14 of the recessed part and a groove edge 6. However, the second recessed part 12 is not limited to such an aspect.

An angle θ1 of the plane 15 of the second recessed part 12 is, for example, preferably 5 to 15°. Besides, the angle θ1 is an angle between a normal line of the tread passing through the groove edge 6 and the plane 15. Such a second recessed part 12 can improve wet performance after abrasion of the tread part.

A maximum amount d2 of recession of the second recessed part 12 is preferably smaller than the amount d1 of recession of the deepest part 13 of the first hollow pat 11.

As shown in FIG. 4, a second groove wall 20 that is the other groove wall of the circumferential groove 3 is provided with at least one first recessed part 11 described above. Furthermore, the second groove wall 20 is provided with at least one second recessed part 12 described above. Besides, FIG. 5(a) shows a cross-sectional view a groove of the second recessed part 12 provided for the second groove wall 20, and FIG. 5(b) shows a cross-sectional view a groove of the first recessed part 11 provided for the second groove wall 20.

As shown in FIG. 4, in a preferred aspect, the second groove wall 20 is provided with a plurality of first recessed parts 11 and a plurality of second recessed parts 12. In a further preferred aspect, the second groove wall 20 according to the present embodiment is provided with first recessed parts 11 and second recessed parts 12 such that the first recessed parts alternate with the second recessed parts in the tire circumferential direction. As a result, steering stability and wet performance after abrasion of the tread part are improved with good balance.

In the present embodiment, for example, the first recessed parts 11 provided for the second groove wall 20 face the second recessed parts 12 provided for the first groove wall 10. For example, the second recessed parts 12 provided for the second groove wall 20 face the first recessed parts 11 provided for the first groove wall 10. As a result, for example, the first recessed parts 11 provided for the first groove wall 10 and the first recessed parts 11 provided for the second groove wall 20 are arranged alternately in the tire circumferential direction. Such an arrangement of the recessed parts can suppress air column resonance in the circumferential groove from becoming louder.

In order to secure a groove volume of the circumferential groove 3, a total amount of recession in the circumferential groove 3 is preferably 0.10 to 0.90 times, more preferably 0.15 to 0.80 times, further preferably 0.20 to 0.70 times as much as the groove width W1 of the circumferential groove 3. Besides, in the present specification, the "total amount of recession in the circumferential groove" refers to c1 + c2 in a case where the circumferential groove 3 has the aspect of FIG. 3 or d1 + d2 in a case where the circumferential groove 3 has the aspect of FIG. 5.

E* at 30°C of the cap rubber layer (30°CE*_{C}) is preferably 4.0 MPa or more, more preferably 4.5 MPa or more, further preferably 5.0 MPa or more, particularly preferably 5.5 MPa or more, from the viewpoint of exerting a restoring force with respect to deformation to improve responsiveness. On the other hand, 30°CE*_{C} is preferably 30 MPa or less, more preferably 25 MPa or less, further preferably 20 MPa or less, further preferably 15 MPa or less, further preferably 12 MPa or less, particularly preferably 8.0 MPa or less, from the viewpoint of the followability to a road surface.

Tan δ at 30°C of the cap rubber layer (30°C tan δ*_{C}) is preferably 0.25 or less, more preferably 0.20 or less, further preferably 0.18 or less, further preferably 0.15 or less, further preferably 0.13 or less, particularly preferably 0.11 or less, from the viewpoint of reducing heat generation during running to suppress hardening of the cap rubber layer over time. Moreover, when the base rubber layer is present, 30°C tan δ of the base rubber layer is preferably 0.40 or less, more preferably 0.35 or less, further preferably 0.30 or less. On the other hand, the tan δ at 30°C of the cap rubber layer and the tan δ at 30°C of the base rubber layer are preferably 0.03 or more, more preferably 0.05 or more, further preferably 0.07 or more, further preferably 0.08 or more, particularly preferably 0.09 or more.

E* at 70°C of a rubber composition constituting the sidewall (70°CE*_{SW}) is preferably 2.0 MPa or more, more preferably 3.0 MPa or more, further preferably 4.0 MPa or more, from the viewpoint of exerting a restoring force with respect to deformation to improve responsiveness. On the other hand, 70°CE*_{SW} is preferably 10.0 MPa or less, more preferably 8.0 MPa or less, further preferably 6.0 MPa or less, from the viewpoint of ride comfort.

Tan δ at 70°C of the rubber composition constituting the sidewall (70°C tan δ_{SW}) is preferably 0.20 or less, more preferably 0.15 or less, further preferably 0.12 or less, further preferably 0.10 or less, further preferably 0.08 or less, particularly preferably 0.06 or less, from the viewpoint of reducing heat generation during running to suppress hardening of the cap rubber layer over time. On the other hand, 70°C tan δ_{SW} is preferably 0.02 or more, more preferably 0.03 or more, further preferably 0.04 or more.

30°CE*_{C} - 70°CE_{*SW} is 3.0 MPa or less, preferably 2.7 MPa or less, more preferably 2.4 MPa or less, further preferably 2.1 MPa or less, further preferably 1.8 MPa or less, particularly preferably 1.6 MPa or less, from the viewpoint of the effects of the present invention. On the other hand, a lower limit value of the 30°CE_{*C} - 70°CE_{*SW} is, but not particularly limited to, preferably 0.1 MPa or more, more preferably 0.3 MPa or more, further preferably 0.5 MPa or more.

Besides, 30°CE_{*}, 70°CE_{*}, 30°C tan δ, and 70°C tan δ of the rubber composition can be appropriately adjusted depending on types or compounding amounts of a rubber component, a filler, and a softening agent that are described later.

A product (30°C tan δ_{C} × t) of 30°C tan δ_{C} and the total thickness t ,in mm, of the tread part is preferably 2.10 or less, more preferably 1.90 or less, further preferably 1.70 or less, particularly preferably 1.50 or less. When 30°C tan δ_{C} × t is within the above-described ranges, it becomes easy to suppress heat generation and heat accumulation in the tread part, and thus it is considered that the effects of the present invention can be easily obtained. On the other hand, a lower limit value of 30°C tan δ_{C} × t is, but not particularly limited to, preferably 0.20 or more, more preferably 0.50 or more, further preferably 0.80 or more, particularly preferably 1.10 or more.

Tg of the cap rubber layer is preferably -40°C or more, more preferably -35°C or more, further preferably -30°C or more, particularly preferably -25°C or more. When Tg is within the above-described ranges, energy loss can be more easily improved at a low temperature than at a normal temperature, grip performance on the tread surface is improved, and thus it is considered that it becomes easy to exert the effects of the present invention more. On the other hand, an upper limit value of Tg of the cap rubber layer is, but not particularly limited to, preferably 20°C or less, more preferably 10°C or less, further preferably 5°C or less, particularly preferably 0°C or less. Besides, Tg of the cap rubber layer can be appropriately adjusted depending on types or compounding amounts of a rubber component, a filler, a softening agent, and the like.

A Shore hardness (Hs) of the cap rubber layer is preferably 40 or more, more preferably 42 or more, further preferably 44 or more, particularly preferably 46 or more. Moreover, the Shore hardness (Hs) of the cap rubber layer is preferably 70 or less, more preferably 65 or less, further preferably 60 or less, further preferably 55 or less, particularly preferably 52 or less. When the Shore hardness (Hs) of the cap rubber layer is within the above-described ranges, it is considered that good steering stability and good wet grip performance can be maintained. Besides, the Shore hardness of the cap rubber layer can be appropriately adjusted depending on types or compounding amounts of a rubber component, a filler, a softening agent, and the like.

The average value of amounts of acetone extraction for the tread rubber is preferably 19% by mass or less, more preferably 17% by mass or less, further preferably 15% by mass or less, particularly preferably 13% by mass or less, from the viewpoint of the effects of the present invention. Moreover, the average value of amounts of acetone extraction for the tread rubber is preferably 3% by mass or more, more preferably 4% by mass or more, further preferably 5% by mass or more, particularly preferably 6% by mass or more.

An amount of acetone extraction for the cap rubber layer is preferably 20% by mass or less, more preferably 18% by mass or less, further preferably 16% by mass or less. Moreover, the amount of acetone extraction for the cap rubber layer is preferably 3% by mass or more, more preferably 4% by mass or more, further preferably 5% by mass or more, particularly preferably 6% by mass or more.

When the base rubber layer is present, an amount of acetone extraction for the base rubber layer is preferably 30% by mass or less, more preferably 25% by mass or less, further preferably 20% by mass or less. Moreover, the amount of acetone extraction for the base rubber layer is preferably 3% by mass or more, more preferably 4% by mass or more, further preferably 5% by mass or more, particularly preferably 6% by mass or more.

An amount of acetone extraction for the rubber composition constituting the sidewall is preferably 12% by mass or less, more preferably 10% by mass or less, further preferably 8% by mass or less, particularly preferably 7% by mass or less. Moreover, a lower limit value of the amount of acetone extraction for the rubber composition constituting the sidewall is, but not particularly limited to, preferably 1% by mass or more, more preferably 2% by mass or more, further preferably 3% by mass or more, particularly preferably 4% by mass or more.

A difference between the average value of the amounts of acetone extraction for the tread rubber and the amount of acetone extraction for the rubber composition constituting the sidewall is preferably 12% by mass or less, more preferably 10% by mass or less, further preferably 8% by mass or less. When the difference between the average value of the amounts of acetone extraction for the tread rubber and the amount of acetone extraction for the rubber composition constituting the sidewall is within the above-described ranges, diffusion of the softening agent from the tread rubber to the sidewall rubber can be controlled adequately. From this, it is considered that a change in hardness of the cap rubber layer due to the use of the tire can be controlled adequately. Moreover, a lower limit value of a difference between the average value of the amounts of acetone extraction for the tread rubber and an amount of acetone extraction for the rubber composition constituting the sidewall is, but not particularly limited to, preferably 1% by mass or more, more preferably 2% by mass or more, further preferably 3% by mass or more.

The average value of the ash contents of the tread rubber is preferably 7.5% by mass or more, more preferably 10% by mass or more, further preferably 13% by mass or more, particularly preferably 16% by mass or more, from the viewpoint of suppressing movement of the softening agent. Moreover, it is preferably 35% by mass or less, more preferably 33% by mass or less, further preferably 31% by mass or less, particularly preferably 29% by mass or less, from the viewpoint of rubber hardness.

An ash content of the cap rubber layer is preferably 10% by mass or more, more preferably 13% by mass or more, further preferably 16% by mass or more, particularly preferably 20% by mass or more. Moreover, it is preferably 35% by mass or less, more preferably 33% by mass or less, further preferably 31% by mass or less, particularly preferably 29% by mass or less, from the viewpoint of rubber hardness.

When the base rubber layer is present, an ash content of the base rubber layer is preferably 20% by mass or less, more preferably 15% by mass or less, further preferably 10% by mass or less, particularly preferably 5% by mass or less. Besides, a lower limit value of the ash content of the base rubber layer is not particularly limited.

### [Rubber composition]

All of the rubber compositions constituting the respective layers of the tread part and the rubber composition constituting the sidewall can be produced with raw materials described below depending on 30°CE_{*}, 70°CE_{*}, 30°C tan δ, 70°C tan δ, etc., as required. The rubber composition according to the present embodiment will be described below, though the description shall be applicable to all of the rubber compositions constituting the respective layers of the tread part and the rubber composition constituting the sidewall unless otherwise noted.

### <Rubber component>

For the rubber composition according to the present embodiment, a diene-based rubber is appropriately used as a rubber component. Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These rubber components may be used alone, or two or more thereof may be used in combination.

A content of the diene-based rubber in the rubber component is preferably 70% by mass or more, more preferably 80% by mass or more, further preferably 90% by mass or more, particularly preferably 95% by mass or more. Moreover, a rubber component only consisting of a diene-based rubber may be used.

As a diene-based rubber component, at least one selected from the group consisting of an isoprene-based rubber, a styrene-butadiene rubber (SBR), and a butadiene rubber (BR) is appropriately used. The rubber component constituting the cap rubber layer preferably comprises an SBR, more preferably comprises an SBR and an isoprene-based rubber, further preferably comprises an SBR, a BR, and an isoprene-based rubber, and may be used as a rubber component only consisting of an SBR, a BR, and an isoprene-based rubber. Each of rubber components constituting the base rubber layer and the sidewall rubber preferably comprises an isoprene-based rubber, more preferably comprises an isoprene-based rubber and a BR, and may be used as a rubber component only consisting of an isoprene-based rubber and a BR.

### (Isoprene-based rubber)

As the isoprene-based rubber, those common in the tire industry can be used, such as, for example, an isoprene rubber (IR) and a natural rubber. Examples of the natural rubber include not only non-modified natural rubbers (NR) but also modified natural rubbers such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component constituting the cap rubber layer is preferably 80% by mass or less, more preferably 75% by mass or less, further preferably 70% by mass or less, particularly preferably 65% by mass or less, from the viewpoint of wet grip performance. Moreover, a lower limit value of the content of the isoprene-based rubber is, but not particularly limited to, preferably 5% by mass or more, more preferably 10% by mass or more, further preferably 15% by mass or more, particularly preferably 20% by mass or more.

A content of the isoprene-based rubber in the rubber component constituting the base rubber layer is preferably 20% by mass or more, more preferably 30% by mass or more, further preferably 40% by mass or more, particularly preferably 50% by mass or more, from the viewpoint of the effects of the present invention. Moreover, an upper limit value of the content of the isoprene-based rubber can be, but not particularly limited to, 100% by mass, 95% by mass or less, 90% by mass or less, or 80% by mass or less.

A content of the isoprene-based rubber in the rubber component constituting the sidewall is preferably 20% by mass or more, more preferably 30% by mass or more, further preferably 40% by mass or more, particularly preferably 50% by mass or more, from the viewpoint of the effects of the present invention. Moreover, an upper limit value of the content of the isoprene-based rubber can be, but not particularly limited to, 100% by mass, 95% by mass or less, 90% by mass or less, or 80% by mass or less.

### (SBR)

The SBR is not particularly limited, examples of which include an unmodified solution-polymerized SBR (S-SBR), an unmodified emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

An oil-extended SBR or a non-oil extended SBR can be used as a SBR. When the oil-extended SBR is used, an oil-extending amount of the SBR, that is, a content of an extending oil in the SBR is preferably 10 to 50 parts by mass based on 100 parts by mass of a rubber solid content of the SBR.

Examples of the S-SBR that can be used in the present embodiment includes those commercially available from JSR Corporation, Sumitomo Chemical Co., Ltd., Ube Industries, Ltd., Asahi Kasei Corporation, ZS Elastomer Co., Ltd., etc.

Although a styrene content of the SBR can be appropriately selected such that a total styrene amount in the rubber component satisfies a range that will be described later, it is preferably 36% by mass or less, more preferably 32% by mass or less, further preferably 28% by mass or less. Moreover, the styrene content of the SBR is preferably 5% by mass or more, more preferably 7% by mass or more, further preferably 10% by mass or more. Besides, the styrene content of the SBR is measured by the above-described measuring method.

A weight-average molecular weight (Mw) of the SBR is preferably 200,000 or more, more preferably 250,000 or more, further preferably 300,000 or more, from the viewpoint of wet grip performance. Moreover, the Mw of the SBR is preferably 2,000,000 or less, more preferably 1,800,000 or less, further preferably 1,500,000 or less, from the viewpoint of cross-linking uniformity. Besides, the Mw of the SBR can be calculated by the above-described measuring method.

Although a content of the SBR in the rubber component constituting the cap rubber layer can be appropriately selected such that a total styrene amount in the rubber component satisfies a range that will be described later, it is preferably 30% by mass or more, more preferably 40% by mass or more, further preferably 50% by mass or more, particularly preferably 55% by mass or more. On the other hand, the content of the SBR in the rubber component is preferably 95% by mass or less, more preferably 90% by mass or less, further preferably 85% by mass or less, further preferably 80% by mass or less, particularly preferably 75% by mass or less. Besides, a content of the SBR in the rubber component constituting the base rubber layer and a content of the SBR in the rubber component constituting the sidewall are not particularly limited.

### (BR)

The BR is not particularly limited, and those common in the tire industry can be used, such as, for example, a BR having a cis content of less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As the high cis BR, for example, those commercially available from Zeon Corporation, Ube Industries, Ltd., JSR Corporation, etc. can be used. When the rubber composition comprises the high cis BR, a low temperature property and abrasion resistance can be improved. The cis content of the high cis BR is preferably 95% by mass or more, more preferably 96% by mass or more, further preferably 97% by mass or more. Besides, the cis content of the BR is measured by the above-described measuring method.

As the modified BR, a modified butadiene rubber (modified BR) is appropriately used, whose terminal and/or main chain are modified with a functional group including at least one element selected from the group consisting of silicon, nitrogen, and oxygen.

Examples of other modified BRs include those obtained by adding a tin compound after polymerizing 1,3-butadiene by a lithium initiator, the terminal of which is further bonded by tin-carbon bond (tin-modified BRs), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR is measured by the above-described measuring method.

A content of the BR in the rubber component constituting the cap rubber layer is preferably 60% by mass or less, more preferably 55% by mass or less, further preferably 50% by mass or less, particularly preferably 45% by mass or less, from the viewpoint of wet grip performance. Moreover, this content is preferably 5% by mass or more, more preferably 10% by mass or more, further preferably 15% by mass or more, particularly preferably 20% by mass or more.

A content of the BR in the rubber component constituting the base rubber layer is preferably 80% by mass or less, more preferably 70% by mass or less, further preferably 60% by mass or less, particularly preferably 50% by mass or less, from the viewpoint of the effects of the present invention. Moreover, a lower limit value of this content can be, but not particularly limited to, for example, 1% by mass or more, 3% by mass or more, 5% by mass or more, 10% by mass or more, or 15% by mass or more.

A content of the BR in the rubber component constituting the sidewall is preferably 80% by mass or less, more preferably 70% by mass or less, further preferably 60% by mass or less, particularly preferably 50% by mass or less, from the viewpoint of the effects of the present invention. Moreover, a lower limit value of this content can be, but not particularly limited to, for example, 1% by mass or more, 5% by mass or more, 10% by mass or more, 20% by mass or more, or 30% by mass or more.

### (Other rubber components)

The rubber component may also comprise other rubber components other than the diene-based rubbers to an extent so as not to affect the effects of the present invention. As the other rubber components other than the diene-based rubbers, a cross-linkable rubber component commonly used in the tire industry can be used, examples of which include, for example, non-diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), and a hydrin rubber. These other rubber components may be used alone, or two or more thereof may be used in combination. Moreover, the rubber component may or may not comprise a known thermoplastic elastomer in addition to the above-described rubber components.

### <Filler>

For the rubber composition according to the present embodiment, a filler comprising carbon black and/or silica is appropriately used. The rubber composition constituting the cap rubber layer more preferably comprises silica as a filler and more preferably comprises carbon black and silica. The rubber compositions constituting the base rubber layer and the sidewall preferably each comprises carbon black as a filler.

### (Carbon black)

As carbon black, those common in the tire industry can be appropriately used, examples of which include, for example, GPF, FEF, HAF, ISAF, SAF, and the like. These carbon black may be used alone, or two or more thereof may be used in combination. Moreover, recovered carbon black obtained by pyrolyzing a product containing carbon black such as a rubber product such as a tire and a plastic product may be appropriately used.

A nitrogen adsorption specific surface area (N₂SA) of carbon black contained in each of the rubber compositions constituting the cap rubber layer and the base rubber layer is preferably 30 m²/g or more, more preferably 50 m²/g or more, further preferably 70 m²/g or more, particularly preferably 90 m²/g or more, from the viewpoint of reinforcing property. Moreover, it is preferably 200 m²/g or less, more preferably 150 m²/g or less, further preferably 120 m²/g or less, from the viewpoints of fuel efficiency and processability. Besides, the N₂SA of carbon black is measured by the above-described measuring method.

A nitrogen adsorption specific surface area (N₂SA) of carbon black contained in the rubber composition constituting the sidewall is preferably 20 m²/g or more, more preferably 40 m²/g or more, further preferably 50 m²/g or more, particularly preferably 60 m²/g or more, from the viewpoint of the effects of the present invention. Moreover, it is preferably 200 m²/g or less, more preferably 150 m²/g or less, further preferably 120 m²/g or less, from the viewpoints of fuel efficiency and processability.

A content of carbon black based on 100 parts by mass of the rubber component of the rubber composition constituting the cap rubber layer is preferably 1 part by mass or more, more preferably 3 parts by mass or more, further preferably 5 parts by mass or more, from the viewpoint of the effects of the present invention. Moreover, this content is preferably 30 parts by mass or less, more preferably 20 parts by mass or less, further preferably 15 parts by mass or less, particularly preferably 9 parts by mass or less.

A content of carbon black based on 100 parts by mass of the rubber component of the rubber composition constituting the base rubber layer is preferably 10 parts by mass or more, more preferably 15 parts by mass or more, further preferably 20 parts by mass or more, particularly preferably 25 parts by mass or more, from the viewpoint of the effects of the present invention. Moreover, it is preferably 80 parts by mass or less, more preferably 70 parts by mass or less, further preferably 60 parts by mass or less, particularly preferably 50 parts by mass or less, from the viewpoint of fuel efficiency.

A content of carbon black based on 100 parts by mass of the rubber component of the rubber composition constituting the sidewall is preferably 10 parts by mass or more, more preferably 15 parts by mass or more, further preferably 20 parts by mass or more, particularly preferably 25 parts by mass or more, from the viewpoint of the effects of the present invention. Moreover, it content is preferably 80 parts by mass or less, more preferably 70 parts by mass or less, further preferably 60 parts by mass or less, particularly preferably 50 parts by mass or less, from the viewpoint of fuel efficiency.

### (Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable for the reason that it has many silanol groups. These silica may be used alone, or two or more thereof may be used in combination.

A nitrogen adsorption specific surface area (N₂SA) of silica is preferably 140 m²/g or more, more preferably 150 m²/g or more, further preferably 160 m²/g or more, particularly preferably 170 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of silica is measured by the above-described measuring method.

A content of silica based on 100 parts by mass of the rubber component of the rubber composition constituting the cap rubber layer is preferably 20 parts by mass or more, more preferably 25 parts by mass or more, further preferably 30 parts by mass or more, particularly preferably 35 parts by mass or more, from the viewpoints of the effects of the present invention and ash content. Moreover, it is preferably 160 parts by mass or less, more preferably 120 parts by mass or less, further preferably 100 parts by mass or less, particularly preferably 80 parts by mass or less, from the viewpoint of the effects of the present invention. Besides, the contents of silica in the rubber composition constituting the base rubber layer and in the rubber composition constituting the sidewall are not particularly limited.

A total content of silica and carbon black based on 100 parts by mass of the rubber component of the rubber composition constituting the cap rubber layer is preferably 20 parts by mass or more, more preferably 25 parts by mass or more, further preferably 30 parts by mass or more, from the viewpoint of the effects of the present invention. Moreover, it is preferably 170 parts by mass or less, more preferably 130 parts by mass or less, further preferably 110 parts by mass or less, particularly preferably 90 parts by mass or less, from the viewpoints of fuel efficiency and elongation at break.

For the rubber composition constituting the cap rubber layer, the content of silica based on 100 parts by mass of the rubber component is preferably greater than the content of carbon black, from the viewpoint of balance between steering stability and wet grip performance. A ratio of silica to the total content of silica and carbon black in the rubber composition constituting the cap rubber layer is preferably 51% by mass or more, more preferably 67% by mass or more, further preferably 76% by mass or more, particularly preferably 85% by mass or more. Moreover, the ratio of silica to the total content of silica and carbon black in the rubber composition constituting the cap rubber layer is preferably 99% by mass or less, more preferably 97% by mass or less, further preferably 95% by mass or less, particularly preferably 93% by mass or less.

### (Other fillers)

Fillers other than silica and carbon black are not particularly limited, and those conventionally and commonly used in the tire industry can be compounded, such as, for example, aluminum hydroxide, alumina (aluminum oxide), calcium carbonate, magnesium sulfate, talc, clay, and biochar. These other fillers may be used alone, or two or more thereof may be used in combination.

### (Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, the rubber component preferably comprises a sulfide-based silane coupling agent and/or a mercapto-based silane coupling agent among them. As a silane coupling agent, for example, those commercially available from Momentive Performance Materials, etc. can be used. These silane coupling agents may be used alone, or two or more thereof may be used in combination.

A content of the silane coupling agent based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

### <Vegetable oil>

A vegetable oil that can be used for the present embodiment is not particularly limited as long as it comprises a glyceride in which unsaturated fatty acids are bonded via ester linkages (unsaturated fatty acid glyceride), and such a vegetable oil may further comprise a saturated fatty acid glyceride. Specific examples of the vegetable oil include, for example, a linseed oil, a rapeseed oil, a safflower oil, a soybean oil, a corn oil, a cottonseed oil, a rice bran oil, a tall oil, a sesame oil, a castor oil, a tung oil, a pine oil, a sunflower oil, a palm oil, an olive oil, a camellia oil, a jojoba oil, a coconut oil, a peanut oil, a grapeseed oil, a rosin, and the like, and the sunflower oil and the rapeseed oil are preferable. These vegetable oils may be used alone, or two or more thereof may be used in combination.

As a vegetable oil, for example, those commercially available from Idemitsu Kosan Co., Ltd., Sankyo Yuka Kogyo K. K., ENEOS Corporation, Olisoy, H&R Group, Hokoku Corporation, Fuji Kosan Co., Ltd., The Nisshin Oillio Group, etc. can be used.

Examples of the unsaturated fatty acids constituting the unsaturated fatty acid glyceride include monounsaturated fatty acids such as oleic acid, and polyunsaturated fatty acids such as linoleic acid and linolenic acid.

A content of the unsaturated fatty acids contained in fatty acids constituting the vegetable oil is preferably 50% by mass or more, more preferably 60% by mass or more, further preferably 70% by mass or more, further preferably 75% by mass or more, further preferably 80% by mass or more, particularly preferably 85% by mass or more.

A content of the vegetable oil based on 100 parts by mass of the rubber component of the rubber composition constituting the cap rubber layer is preferably 3.0 parts by mass or more, more preferably 5.0 parts by mass or more, further preferably 7.0 parts by mass or more, particularly preferably 9.0 parts by mass or more. Moreover, the content is preferably 40 parts by mass or less, more preferably 35 parts by mass or less, further preferably 30 parts by mass or less, particularly preferably 25 parts by mass or less. Besides, a content of the vegetable oil based on 100 parts by mass of the rubber component of the rubber composition constituting the base rubber layer is not particularly limited.

An average value S1 of the content of the vegetable oil based on 100 parts by mass of the rubber component of the tread rubber constituting the tread part is preferably 3.0 parts by mass or more, more preferably 5.0 parts by mass or more, further preferably 7.0 parts by mass or more, particularly preferably 9.0 parts by mass or more. Moreover, S1 is preferably 35 parts by mass or less, more preferably 30 parts by mass or less, further preferably 25 parts by mass or less, particularly preferably 20 parts by mass or less.

A content S2 of the vegetable oil based on 100 parts by mass of the rubber component of the rubber composition constituting the sidewall is preferably 1.0 part by mass or more, more preferably 1.5 parts by mass or more, further preferably 2.0 parts by mass or more, particularly preferably 2.5 parts by mass or more. Moreover, S2 is preferably 20 parts by mass or less, more preferably 15 parts by mass or less, further preferably 10 parts by mass or less, further preferably 8.0 parts by mass or less, particularly preferably 5.0 parts by mass or less.

S1/S2 is greater than 1.0, preferably 1.1 or more, more preferably 1.3 or more, further preferably 1.6 or more, particularly preferably 1.7 or more, from the viewpoint of the effects of the present invention. Moreover, an upper limit value of S1/S2 is, but not particularly limited to, preferably less than 15, more preferably less than 10, further preferably less than 8.0, particularly preferably less than 5.0.

### <Other compounding agents>

The rubber composition according to the present embodiment can appropriately comprise compounding agents conventionally and commonly used in the tire industry, such as, for example, a softening agent, wax, processing aid, stearic acid, zinc oxide, an antioxidant, a vulcanizing agent, and a vulcanization accelerator, in addition to the above-described components.

### (Softening agent)

The rubber composition according to the present embodiment preferably comprises a softening agent. Examples of the softening agent include, for example, a resin component, oil other than vegetable oils, a liquid rubber, and the like.

Examples of the resin component include, but not particularly limited to, hydrocarbon resins such as a petroleum resin, a terpene-based resin, a rosin-based resin, and a phenol-based resin, which are commonly used in the tire industry.

Examples of the petroleum resin include a C5-based petroleum resin, an aromatic petroleum resin, a C5-C9-based petroleum resin, and the like.

In the present specification, the "C5-based petroleum resin" means a resin obtained by polymerizing C5 fractions and may be those undergoing hydrogeneration or modification. Examples of C5 fractions include, for example, petroleum fractions having 4 to 5 carbon atoms, such as cyclopentadiene, pentene, pentadiene, and isoprene. Dicyclopentadiene resin (DCPD resin) is appropriately used as a C5-based petroleum resin.

In the present specification, the "aromatic petroleum resin" means a resin obtained by polymerizing C9 fractions and may be those undergoing hydrogeneration or modification. Examples of C9 fractions include, for example, petroleum fractions having 8 to 10 carbon atoms, such as vinyltoluene, alkylstyrene, indene, and methylindene. As a specific example of the aromatic petroleum resin, for example, a coumarone-indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and the copolymer of α-methylstyrene and styrene is more preferable, because it is economical, easy to process, and good in heat generation. As the aromatic vinyl-based resin, for example, those commercially available from Kraton Corporation, Eastman Chemical Company, etc. can be used.

In the present specification, the "C5-C9-based petroleum resin" means a resin obtained by polymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as α-pinene, β-pinene, limonene, and dipentene; an aromatic modified terpene resin made from a terpene compound as described above and an aromatic compound; a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, α-methylstyrene, vinyltoluene, divinyltoluene, and the like. Examples of the phenol-based compound from which the terpene phenol resin is made include, for example, phenol, bisphenol A, cresol, xylenol, and the like.

Examples of the rosin-based resin include, but not particularly limited to, for example, a natural resin rosin, a rosin-modified resin obtained by modifying it by hydrogenation, disproportionation, dimerization, or esterification, and the like.

Examples of the phenol-based resin include, but not particularly limited to, a phenol formaldehyde resin, an alkylphenol formaldehyde resin, an alkyl phenol acetylene resin, an oil-modified phenol formaldehyde resin, and the like.

A content of the resin component when compounded based on 100 parts by mass of the rubber component is preferably 1 part by mass or more, more preferably 3 parts by mass or more, further preferably 5 parts by mass or more. Moreover, the content of the resin component is preferably 50 parts by mass or less, more preferably 40 parts by mass or less, further preferably 30 parts by mass or less.

Examples of oil other than vegetable oils include, for example, paraffinic process oils (mineral oils), naphthenic process oils, aromatic process oils, and the like. Specific examples of the process oils include, for example, MES (Mild Extract Solvated), DAE (Distillate Aromatic Extract), TDAE (Treated Distillate Aromatic Extract), TRAE (Treated Residual Aromatic Extract), RAE (Residual Aromatic Extract), and the like. Moreover, a process oil having a low content of a polycyclic aromatic compound (PCA) can also be used for environmental measures. Examples of the process oil having a low PCA content include the MES, the TDAE, a heavy naphthenic oil, and the like. Moreover, from the viewpoint of a life cycle assessment, one obtained by refining a waste oil after use for a rubber mixing machine or an engine or waste cooking oil used in a cooking facility may be used.

A content of oil other than vegetable oils when compounded based on 100 parts by mass of the rubber component is preferably 1 part by mass or more, more preferably 3 parts by mass or more, further preferably 5 parts by mass or more. Moreover, the content is preferably 50 parts by mass or less, more preferably 40 parts by mass or less, further preferably 30 parts by mass or less.

The liquid rubber is not particularly limited as long as it is a polymer in a liquid state at a normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 3 parts by mass or more, further preferably 5 parts by mass or more. Moreover, the content is preferably 30 parts by mass or less, more preferably 20 parts by mass or less, further preferably 10 parts by mass or less.

Although a content of the softening agent based on 100 parts by mass of the rubber component of the rubber composition constituting the cap rubber layer (a total amount of all of a plurality of softening agents including the vegetable oil when used in combination) can be appropriately selected, for example, such that a difference between an average value of amounts of acetone extraction for the tread rubber and an amount of acetone extraction for the rubber composition constituting the sidewall satisfies the above-described ranges, it is preferably 3 parts by mass or more, more preferably 5 parts by mass or more, further preferably 7 parts by mass or more, particularly preferably 9 parts by mass or more. Moreover, the content is preferably 60 parts by mass or less, more preferably 50 parts by mass or less, further preferably 45 parts by mass or less, particularly preferably 40 parts by mass or less. Besides, a content of the softening agent in the rubber composition constituting the base rubber layer is not particularly limited.

Although a content of the softening agent based on 100 parts by mass of the rubber component of the rubber composition constituting the sidewall (a total amount of all of a plurality of softening agents including the vegetable oil when used in combination) can be appropriately selected, for example, such that a difference between the average value of amounts of acetone extraction for the tread rubber and an amount of acetone extraction for the rubber composition constituting the sidewall satisfies the above-described ranges, it is preferably 1 part by mass or more, more preferably 2 parts by mass or more, further preferably 3 parts by mass or more. Moreover, the content is preferably 25 parts by mass or less, more preferably 20 parts by mass or less, further preferably 15 parts by mass or less, particularly preferably 10 parts by mass or less.

The wax is not particularly limited, and any of those commonly used in the tire industry can be appropriately used, examples of which include, for example, a petroleum-based wax, a mineral-based wax, a synthetic wax, and the like. Among them, the petroleum-based wax is preferable. Examples of the petroleum-based wax include, for example, a paraffin wax, a microcrystalline wax, a selected special wax thereof, and the like. Among them, the paraffin wax is preferable. Besides, the wax according to the present embodiment does not include stearic acid. As the wax, for example, those commercially available from Ouchi Shinko Chemical Industry Co., Nippon Seiro Co., Ltd., PARAMELT, etc. can be used. These waxes may be used alone, or two or more thereof may be used in combination.

A content of wax when compounded based on 100 parts by mass of the rubber component is preferably 0.5 parts by mass or more, more preferably 1.0 part by mass or more, further preferably 1.5 parts by mass or more, from the viewpoint of weather resistance of a rubber. Moreover, it is preferably 10 parts by mass or less, more preferably 5.0 parts by mass or less, from the viewpoint of prevention of whitening of a tire due to bloom.

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1.0 part by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt, preferably phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdered sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of prevention of deterioration. Besides, a content of the vulcanizing agent in a case where an oil-containing sulfur is used as the vulcanizing agent shall be a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexane, and the like. As these vulcanizing agents other than sulfur, those commercially available from Taoka Chemical Co., Ltd., LANXESS, Flexsys, etc. can be used.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamic acid salt-based vulcanization accelerator, caprolactam disulfide, and the like. These vulcanization accelerators may be used alone, or two or more thereof may be used in combination. Among them, one or more vulcanization accelerators selected from the group consisting of the sulfenamide-based vulcanization accelerator, the thiazole-based vulcanization accelerator, and the guanidine-based vulcanization accelerator are preferable from the viewpoint that desired effects can be obtained more appropriately.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl) mercaptobenzothiazole, 2-(2,6-diethyl-4-morpholinothio) benzothiazole, and the like. Among them, the MBTS and MBT are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenyl guanidine, 1,3-di-o-biphenyl guanidine, 1,3-di-o-cumenyl-2-propionyl guanidine, and the like. Among them, DPG is preferable.

A content of the vulcanization accelerator when compounded based on 100 parts by mass of the rubber component (a total amount of all of a plurality of vulcanization accelerators when used in combination) is preferably 1.0 part by mass or more, more preferably 2.0 parts by mass or more, further preferably 2.5 parts by mass or more. Moreover, the content is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

### [Production of rubber composition and tire]

The rubber composition according to the present embodiment can be produced by a known method. For example, it can be produced by kneading the respective above-described components with a rubber kneading machine such as an open roll and a sealed type kneader (a Banbury mixer, a kneader, and the like).

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire comprising the tread that comprises the cap rubber layer and the base rubber layer and the sidewall can be produced using the respective corresponding rubber compositions by a usual method. That is, unvulcanized rubber compositions corresponding to the cap rubber layer, the base rubber layer, and the sidewall rubber, as obtained by the above-described methods, are extruded into respective shapes with an extruder equipped with a mouthpiece having a predetermined shape, the extruded unvulcanized rubber compositions are attached together with other tire members on a tire forming machine, and they are molded by a usual method to form an unvulcanized tire. The tire according to the present embodiment can be produced by heating and pressurizing this unvulcanized tire in a vulcanizing machine. Examples of vulcanization conditions include, but not particularly limited to, for example, a method of vulcanizing at 150°C to 200°C for 10 to 30 minutes.

### [Application of tire]

The tire according to the present embodiment can be appropriately used as a tire for a passenger car, a tire for a truck/bus, a motorcycle tire, or a racing tire, and among them, the tire is preferably used as a tire for a passenger car. Besides, the tire for a passenger car refers to a tire that is presupposed to be mounted to a vehicle running with four wheels and that has a maximum load capacity of 1000 kg or less. Moreover, the tire according to the present embodiment can be used as an all-season tire, a summer tire, or a winter tire such as a studless tire.

### EXAMPLES

Hereinafter, examples considered to be preferable in implementing the present invention (Examples) will be described, though the scope of the present invention is not limited to these Examples only. Tires are examined which comprise cap rubber layers and base rubber layers of treads and sidewalls as obtained using various chemicals described below in accordance with compounding formulations of Tables 1 and 2, and results calculated based on evaluation methods described below are shown in Table 3.

Various chemicals used in Examples and Comparative examples are collectively shown below.
NR: TSR 20
SBR: HPR850 manufactured by JSR Corporation (modified SBR, styrene content: 27.5% by mass, non-oil extended product)
BR: Ubepol BR (Registered Trademark) 150B manufactured by Ube Industries, Ltd. (unmodified BR, cis content: 97% by mass, Mw: 440,000)
Carbon black 1: SHOW BLACK N220 manufactured by Cabot Japan K.K., (N₂SA: 111 m²/g)
Carbon black 2: DIABLACK (Registered Trademark) E manufactured by Mitsubishi Chemical Corporation (FEF, N550, N₂SA: 41 m²/g)
Carbon black 3: SHOW BLACK N330 manufactured by Cabot Japan K.K., (N₂SA: 75 m²/g)
Silica: Ultrasil VN3 manufactured by Evonik Degussa GmbH (N₂SA: 175 m²/g)
Silane coupling agent: Si266 manufactured by Evonik Degussa GmbH (bis(3-triethoxysilylpropyl)disulfide)
Vegetable oil: Sunflower oil manufactured by The Nisshin Oillio Group (content of oleic acids contained in constituent fatty acids: 55% by mass, total content of polyunsaturated fatty acids contained in constituent fatty acids: 8% by mass)
Oil 1: Diana process oil AC-12 manufactured by Idemitsu Kosan Co., Ltd. (aromatic process oil)
Oil 2: Diana process oil PW-380 manufactured by Idemitsu Kosan Co., Ltd. (paraffinic process oil)
Zinc oxide: Zinc oxide No. 1 manufactured by Mitsui Mining & Smelting Co., Ltd.
Antioxidant: Nocrac 6C manufactured by Ouchi Shinko Chemical Industry Co., Ltd. (N-(1,3-dimethylbutyl)-N'-phenyl-p-phenylenediamine)
Stearic acid: Bead stearic acid "CAMELLIA" manufactured by NOF CORPORATION
Wax: OZOACE 0355 manufactured by Nippon Seiro Co., Ltd. (paraffin wax)
Sulfur: HK-200-5 manufactured by Hosoi Chemical Industry Co., Ltd. (5% oil-containing powdered sulfur)
Vulcanization accelerator 1: Nocceler D manufactured by Ouchi Shinko Chemical Industry Co., Ltd. (1,3-diphenylguanidine (DPG))
Vulcanization accelerator 2: Nocceler CZ manufactured by Ouchi Shinko Chemical Industry Co., Ltd. (N-cyclohexyl-2-benzothiazolylsulfenamide (CBS))

### (Examples and Comparative examples)

According to the compounding formulations shown in Tables 1 and 2, using a 1.7 L closed Banbury mixer, chemicals other than sulfur and a vulcanization accelerator are kneaded for 1 to 10 minutes until the temperature reaches a discharge temperature of 150 to 160°C, to obtain a kneaded product. Next, using a twin-screw open roll, sulfur and the vulcanization accelerator are added to this kneaded product, and the mixture is kneaded for 4 minutes until the temperature reaches 105°C, to obtain an unvulcanized rubber composition. This unvulcanized rubber composition is extruded into shapes of a cap rubber layer, a base rubber layer, and a sidewall and attached together with other tire members to produce an unvulcanized tire, and the unvulcanized tire is vulcanized at 170°C, thereby obtaining each test tire shown in Table 3 (size: 205/55R16, rim: 16 × 6.5J, internal pressure: 250 kPa). Besides, a total thickness of every tread part is 1 mm. Moreover, a cap rubber layer and a base rubber layer in each of Example 10 and Comparative example 7 are prepared to have a thickness of 7.5 mm and a thickness of 3.5 mm, respectively.

### < Measurement of 30°CE* and 30°C tan δ>

For each vulcanized rubber test piece prepared to have a length of 20 mm, a width of 4 mm, and a thickness of 1 mm by being cut out from the inside of each rubber layer of a tread part of each test tire such that a tire circumferential direction becomes a long side and a tire radial direction becomes a thickness direction, a complex elastic module E* and a loss tangent tan δ are measured using a dynamic viscoelasticity measuring apparatus (EPLEXOR series manufactured by gabo Systemtechnik GmbH) under a condition of a temperature at 30°C, a frequency of 10 Hz, an initial strain of 5%, a dynamic strain of 1%, and an extension mode.

### < Measurement of 70°CE* and 70°C tan δ>

For each vulcanized rubber test piece prepared to have a length of 20 mm, a width of 4 mm, and a thickness of 1 mm by cutting out from the inside of a sidewall rubber of each test tire such that a tangent line to the tire circumferential direction becomes a long side and a tire width direction (a direction of the normal line to a sidewall surface) becomes a thickness direction, a complex elastic module E* and a loss tangent tan δ are measured using a dynamic viscoelasticity measuring apparatus (EPLEXOR series manufactured by gabo Systemtechnik GmbH) under a condition of a temperature at 70°C, a frequency of 10 Hz, an initial strain of 10%, a dynamic strain of 1%, and an extension mode.

### < Measurement of glass transition temperature (Tg)>

For each vulcanized rubber test piece prepared to have a length of 20 mm, a width of 4 mm, and a thickness of 1 mm by being cut out from the inside of each rubber layer of the tread part of each test tire such that the tire circumferential direction becomes a long side and the tire radial direction becomes a thickness direction, a temperature distribution curve of tan δ in a range from -60°C to 40°C is measured using a dynamic viscoelasticity measuring apparatus (EPLEXOR series manufactured by gabo Systemtechnik GmbH) under a condition of a frequency of 10 Hz, an initial strain of 10%, an amplitude of ±0.5%, and a temperature rising rate of 2°C/min, and a temperature corresponding to the largest value of tan δ in the obtained temperature distribution curve (tan δ peak temperature) is determined as Tg of the rubber composition.

### < Measurement of rubber hardness (Hs)>

For each vulcanized rubber test piece prepared by being cut out from the inside of each rubber layer of the tread part of each test tire such that the tire radial direction becomes a thickness direction, a Shore hardness (Hs) at 23°C of each rubber test piece is measured in accordance with JIS K 6253-3:2012 using a type-A durometer.

### < Measurement of an amount of acetone extraction (AE amount)>

For each vulcanized rubber test piece prepared by being cut out of each rubber layer of the tread part of each test tire, an AE amount is measured. Each vulcanized rubber test piece is immersed in acetone for 24 hours to extract a soluble component, a mass of each test piece before and after the extraction is measured, and an AE amount is calculated using the following equation.

Amount of acetone extraction (% by mass) = {(mass of vulcanized rubber test piece before extraction - mass of vulcanized rubber test piece after extraction)/(mass of vulcanized rubber test piece before extraction)} × 100

### < Measurement of ash content>

A vulcanized rubber test piece prepared by being cut out of each rubber layer of the tread part of each test tire is put in a crucible made of alumina and is heated in an electric furnace at 550°C for 4 hours. Then, an ash content (% by mass) is calculated by the equation: (mass of test piece after heating /mass of test piece before heating) × 100.

### <Steering stability on a wet road>

Each test tire in mint condition and each test tire after abrasion are mounted on four wheels of an FF passenger vehicle with a displacement of 2000 cc, and the FF passenger vehicle is run on a test course with a wet asphalt road surface. A handling property is evaluated based on feeling of each of test drivers during straight running, changing lanes, and accelerating/decelerating when running at 120 km/hour. The evaluations are performed using an integer value of 1 to 5 points, and based on evaluation criteria that the higher the score is, the better the handling property is, a total score by 20 test drivers is calculated. A total score of a control tire (Comparative example 2) in mint condition is converted into a reference value (100), and an evaluation result after abrasion of each test tire is indicated as an index in proportion to the total score. Additionally, a total performance shall be represented by a total of an index of steering stability on a wet road in mint condition and an index of steering stability on a wet road after abrasion.

Besides, after a tread part is abraded along a tread radius such that a depth of a circumferential groove of a tire in mint condition having the deepest depth becomes 50% of its depth in mint condition, this tire is thermally deteriorated at 80°C for 7 days, thereby preparing each test tire after abrasion.

**Table 1**

| | Cap rubber layer | | | | | | |
|---|---|---|---|---|---|---|---|
| | A1 | A2 | A3 | A4 | A5 | A6 | A7 |
| Compounding amount (part by mass) | | | | | | | |
| NR | 20 | 20 | 20 | 20 | 20 | 20 | 20 |
| SBR | 60 | 60 | 60 | 60 | 60 | 60 | 60 |
| BR | 20 | 20 | 20 | 20 | 20 | 20 | 20 |
| Silica | 60 | 50 | 60 | 60 | 60 | 50 | 50 |
| Carbon black 1 | 5.0 | 5.0 | 5.0 | 5.0 | 5.0 | 5.0 | 5.0 |
| Silane coupling agent | 4.0 | 4.0 | 4.0 | 4.0 | 4.0 | 4.0 | 4.0 |
| Vegetable oil | 15.0 | 15.0 | - | - | 5.0 | 4.0 | 10.0 |
| Oil 1 | - | - | - | 15.0 | - | - | 5.0 |
| Oil 2 | - | - | 15.0 | - | - | - | - |
| Zinc oxide | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 |
| Wax | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 |
| Vulcanization accelerator 1 | 2.3 | 2.3 | 2.3 | 2.3 | 2.3 | 2.3 | 2.3 |
| Vulcanization accelerator 2 | - | - | - | - | - | - | - |
| Total styrene amount (% by mass) | 16.5 | 16.5 | 16.5 | 16.5 | 16.5 | 16.5 | 16.5 |

| Physical properties | | | | | | | |
|---|---|---|---|---|---|---|---|
| 30°CE*_{C} (MPa) | 6.2 | 6.2 | 6.2 | 6.2 | 8.0 | 8.5 | 6.2 |
| 30°C tan δ | 0.15 | 0.13 | 0.15 | 0.15 | 0.15 | 0.13 | 0.15 |
| Tg (°C) | -26 | -25 | -23 | -20 | -23 | -22 | -26 |
| Shore hardness (Hs) | 52 | 48 | 57 | 53 | 57 | 53 | 52 |
| Amount of acetone extraction (% by mass) | 12 | 13 | 7 | 12 | 7 | 7 | 12 |
| Ash content (% by mass) | 30 | 26 | 28 | 30 | 28 | 28 | 30 |

| | | Cap rubber layer | | | | | Base rubber layer |
|---|---|---|---|---|---|---|---|
| | | A8 | | A9 | | A10 | B1 |
| Compounding amount (part by mass) | | | | | | | |
| NR | | 20 | | 30 | | 60 | 70 |
| SBR | | 60 | | 30 | | 40 | - |
| BR | | 20 | | 40 | | - | 30 |
| Silica | | 45 | | 50 | | 50 | - |
| Carbon black 1 | | 5.0 | | 5.0 | | 5.0 | 40 |
| Silane coupling agent | | 4.0 | | 4.0 | | 4.0 | - |
| Vegetable oil | | 25.0 | | 15.0 | | 15.0 | - |
| Oil 1 | | - | | - | | - | - |
| Oil 2 | | - | | - | | - | - |
| Zinc oxide | | 2.0 | | 2.0 | | 2.0 | 2.0 |
| Antioxidant | | 2.0 | | 2.0 | | 2.0 | 2.0 |
| Stearic acid | | 2.0 | | 2.0 | | 2.0 | 2.0 |
| Wax | | 1.5 | | 1.5 | | 1.5 | 2.0 |
| Sulfur | | 1.5 | | 1.5 | | 1.5 | 2.0 |
| Vulcanization accelerator 1 | | 2.3 | | 2.3 | | 2.3 | 2.0 |
| Vulcanization accelerator 2 | | | | | | | 2.0 |
| Total styrene amount (% by mass) | | 16.5 | | 8.3 | | 11.0 | 0 |

| Physical properties | | | | | | | |
|---|---|---|---|---|---|---|---|
| 30°CE*_{C} (MPa) | | 5.3 | | 5.9 | | 5.8 | 2.7 |
| 30°C tan δ_{C} | | 0.11 | | 0.14 | | 0.15 | 0.13 |
| Tg (°C) | | -30 | | -40 | | -34 | -43 |
| Shore hardness (Hs) | | 42 | | 48 | | 48 | 61 |
| Amount of acetone extraction (% by mass) | | 17 | | 13 | | 13 | 7 |
| Ash content (% by mass) | | 23 | | 26 | | 26 | 0 |

**Table 2**

| | Sidewall rubber | | | | |
|---|---|---|---|---|---|
| | C1 | C2 | C3 | C4 | C5 |
| Compounding amount (part by mass) | | | | | |
| NR | 50 | 50 | 50 | 50 | 50 |
| BR | 50 | 50 | 50 | 50 | 50 |
| Carbon black 2 | 30 | 30 | 30 | 30 | - |
| Carbon black 3 | - | - | - | - | 30 |
| Vegetable oil | 7.0 | 4.0 | 3.0 | - | 3.0 |
| Oil 2 | - | - | - | 7.0 | - |
| Zinc oxide | 4.0 | 4.0 | 4.0 | 4.0 | 4.0 |
| Stearic acid | 2.5 | 2.5 | 2.5 | 2.5 | 2.5 |
| Wax | 1.2 | 1.2 | 1.2 | 1.2 | 1.2 |
| Sulfur | 0.7 | 0.7 | 0.7 | 0.7 | 0.7 |
| Vulcanization accelerator 2 | 0.7 | 0.7 | 0.7 | 0.7 | 0.7 |

| Physical properties | | | | | |
|---|---|---|---|---|---|
| 70°CE*_{SW} (MPa) | 4.5 | 4.7 | 5.1 | 4.5 | 6.0 |
| 70°C tan δ_{SW} | 0.08 | 0.06 | 0.05 | 0.08 | 0.13 |
| Amount of acetone extraction (% by mass) | 8 | 6 | 6 | 8 | 6 |

**Table 3**

| | Example | | | | |
|---|---|---|---|---|---|
| | 1 | 2 | 3 | 4 | 5 |
| Cap rubber layer | A1 | A1 | A2 | A2 | A7 |
| Base rubber layer | - | - | - | - | - |
| Sidewall rubber | C1 | C2 | C1 | C2 | C2 |

| Vegetable oil (part by mass) | | | | | |
|---|---|---|---|---|---|
| Cap rubber layer | 15.0 | 15.0 | 15.0 | 15.0 | 10.0 |
| Base rubber layer | - | - | - | - | - |
| S1 | 15.0 | 15.0 | 15.0 | 15.0 | 10.0 |
| S2 | 7.0 | 4.0 | 7.0 | 4.0 | 4.0 |
| S1/S2 | 2.1 | 3.8 | 2.1 | 3.8 | 2.5 |

| Amount of acetone extraction (% by mass) | | | | | |
|---|---|---|---|---|---|
| Cap rubber layer | 12 | 12 | 13 | 13 | 12 |
| Base rubber layer | - | - | - | - | - |
| (A) Tread rubber | 12 | 12 | 13 | 13 | 12 |
| (B) Sidewall rubber | 8 | 6 | 8 | 6 | 6 |
| (A) - (B) | 4 | 6 | 5 | 7 | 6 |

| Ash content (% by mass) | | | | | |
|---|---|---|---|---|---|
| Cap rubber layer | 30 | 30 | 26 | 26 | 30 |
| Base rubber layer | - | - | - | - | - |
| Tread rubber | 30 | 30 | 26 | 26 | 30 |
| 30°CE*_{C} (MPa) | 6.2 | 6.2 | 6.2 | 6.2 | 6.2 |
| 30°C tan δ_{C} | 0.15 | 0.15 | 0.13 | 0.13 | 0.15 |
| 70°CE*_{SW} (MPa) | 4.5 | 4.7 | 4.5 | 4.7 | 4.7 |
| 70°C tan δ_{SW} | 0.08 | 0.06 | 0.08 | 0.06 | 0.06 |
| 30°CE*_{C} - 70°CtE*_{SW} | 1.7 | 1.5 | 1.7 | 1.5 | 1.5 |
| 30°C tan δ_{C} × t | 1.65 | 1.65 | 1.43 | 1.43 | 1.65 |
| Total styrene amount of cap rubber layer (% by mass) | 16.5 | 16.5 | 16.5 | 16.5 | 16.5 |
| Shore hardness of cap rubber layer (Hs) | 52 | 52 | 48 | 48 | 52 |

| | Example | | | | |
|---|---|---|---|---|---|
| | 1 | 2 | 3 | 4 | 5 |
| Tg of cap rubber layer (°C) | -26 | -26 | -25 | -25 | -26 |
| Steering stability on wet road surface (in mint condition) | 100 | 106 | 106 | 108 | 104 |
| Steering stability on wet road surface (after abrasion) | 96 | 102 | 102 | 104 | 98 |

| | Example | | | | |
|---|---|---|---|---|---|
| | 6 | 7 | 8 | 9 | 10 |
| Cap rubber layer | A8 | A9 | A10 | A5 | A2 |
| Base rubber layer | - | - | - | - | B1 |
| Sidewall rubber | C2 | C2 | C2 | C5 | C2 |

| Vegetable oil (part by mass) | | | | | |
|---|---|---|---|---|---|
| Cap rubber layer | 15.0 | 15.0 | 15.0 | 5.0 | 15.0 |
| Base rubber layer | - | - | - | - | 0 |
| S1 | 15.0 | 15.0 | 15.0 | 5.0 | 10.2 |
| S2 | 4.0 | 4.0 | 4.0 | 3.0 | 4.0 |
| S1/S2 | 3.8 | 3.8 | 3.8 | 1.7 | 2.6 |

| Amount of acetone extraction (% by mass) | | | | | |
|---|---|---|---|---|---|
| Cap rubber layer | 17 | 13 | 13 | 7 | 13 |
| Base rubber layer | - | - | - | - | 7 |
| (A) Tread rubber | 17 | 13 | 13 | 7 | 11 |
| (B) Sidewall rubber | 6 | 6 | 6 | 6 | 6 |
| (A) - (B) | 11 | 7 | 7 | 1 | 5 |

| Ash content (% by mass) | | | | | |
|---|---|---|---|---|---|
| Cap rubber layer | 23 | 26 | 26 | 28 | 26 |
| Base rubber layer | - | - | - | - | 0 |
| Tread rubber | 23 | 26 | 26 | 28 | 18 |
| 30°CE*_{C} (MPa) | 5.3 | 5.9 | 5.8 | 8.0 | 6.2 |
| 30°C tan δ_{C} | 0.11 | 0.14 | 0.15 | 0.15 | 0.13 |
| 70°CE*_{SW} (MPa) | 4.7 | 4.7 | 4.7 | 6.0 | 4.7 |
| 70°C tan δ_{SW} | 0.06 | 0.06 | 0.06 | 0.13 | 0.06 |
| 30°CE*_{C} - 70°CtE*_{SW} | 0.6 | 1.2 | 1.1 | 2.0 | 1.5 |
| 30°C tan δ_{C} × t | 1.21 | 1.54 | 1.65 | 1.65 | 1.43 |
| Total styrene amount of cap rubber layer (% by mass) | 16.5 | 8.3 | 11.0 | 16.5 | 16.5 |
| Shore hardness of cap rubber layer (Hs) | 42 | 48 | 48 | 57 | 48 |
| Tg of cap rubber layer (°C) | -30 | -40 | -34 | -23 | -25 |
| Steering stability on wet road surface (in mint condition) | 116 | 102 | 110 | 106 | 104 |
| Steering stability on wet road surface (after abrasion) | 106 | 100 | 106 | 104 | 98 |

| | Comparative example | | | | | | |
|---|---|---|---|---|---|---|---|
| | 1 | 2 | 3 | 4 | 5 | 6 | 7 |
| Cap rubber layer | A3 | A4 | A5 | A6 | A3 | A1 | A3 |
| Base rubber layer | - | - | - | - | - | - | B1 |
| Sidewall rubber | C1 | C1 | C1 | C3 | C4 | C4 | C1 |

| Vegetable oil (part by mass) | | | | | | | |
|---|---|---|---|---|---|---|---|
| Cap rubber layer | 0 | 0 | 5.0 | 4.0 | 0 | 15.0 | 0 |
| Base rubber layer | - | - | - | - | - | - | 0 |
| S1 | 0 | 0 | 5.0 | 4.0 | 0 | 15.0 | 0 |
| S2 | 7.0 | 7.0 | 7.0 | 3.0 | 0 | 0 | 7.0 |
| S1/S2 | 0 | 0 | 0.7 | 1.3 | - | - | 0 |

| Amount of acetone extraction (% by mass) | | | | | | | |
|---|---|---|---|---|---|---|---|
| Cap rubber layer | 7 | 12 | 7 | 7 | 7 | 12 | 7 |
| Base rubber layer | - | - | - | - | - | - | 7 |
| (A) Tread rubber | 7 | 12 | 7 | 7 | 7 | 12 | 7 |
| (B) Sidewall rubber | 8 | 8 | 8 | 6 | 8 | 8 | 8 |
| (A) - (B) | -1 | 4 | -1 | 1 | -1 | 4 | -1 |

| Ash content (% by mass) | | | | | | | |
|---|---|---|---|---|---|---|---|
| Cap rubber layer | 28 | 30 | 28 | 28 | 28 | 30 | 28 |
| Base rubber layer | - | - | - | - | - | - | 0 |
| Tread rubber | 28 | 30 | 28 | 28 | 28 | 30 | 28 |
| 30°CE*_{C} (MPa) | 8.5 | 6.2 | 8.0 | 8.5 | 8.5 | 6.2 | 8.5 |
| 30°C tan δ_{C} | 0.15 | 0.15 | 0.15 | 0.13 | 0.15 | 0.15 | 0.15 |
| 70°CE*_{SW} (MPa) | 4.5 | 4.5 | 4.5 | 5.1 | 4.5 | 4.5 | 4.5 |
| 70°C tan δ_{SW} | 0.08 | 0.08 | 0.08 | 0.05 | 0.08 | 0.08 | 0.08 |
| 30°CE*_{C} - 70°CtE*_{SW} | 4.0 | 1.7 | 3.5 | 3.4 | 4.0 | 1.7 | 4.0 |
| 30°C tan δ_{C} × t | 1.65 | 1.65 | 1.65 | 1.43 | 1.65 | 1.65 | 1.65 |
| Total styrene amount of cap rubber layer (% by mass) | 16.5 | 16.5 | 16.5 | 16.5 | 16.5 | 16.5 | 16.5 |
| Shore hardness of cap rubber layer (Hs) | 57 | 53 | 57 | 53 | 57 | 52 | 57 |
| Tg of cap rubber layer (°C) | -23 | -20 | -23 | -22 | -23 | -26 | -23 |
| Steering stability on wet road surface (in mint condition) | 96 | 100 | 92 | 94 | 96 | 98 | 92 |
| Steering stability on wet road surface (after abrasion) | 86 | 88 | 86 | 88 | 86 | 84 | 88 |

### REFERENCE SIGNS LIST

- 1: Tread part
- 2: Cap rubber layer
- 3: Circumferential groove
- 4.: Base rubber layer
- 5: Tread surface
- 6: Groove edge
- 7: Profile of groove wall
- 8: Groove edge-side portion of land part
- 9: Recessed part
- 10: First groove wall
- 11: First recessed part
- 12: Second recessed part
- 13, 14: The deepest portion of recessed part
- 15: Plane
- 17: Recessed surface part
- 18: Convex surface part
- 20: Second groove wall
- 21: Part whose groove width gradually decreases
- 31: Bead core
- 32: Sidewall
- 33: Bead part
- 34: Carcass
- 35: Belt layer
- 36: Belt reinforcement layer
- 37: Inner liner
- 38: Rim
- 39: Clinch
- 40: Wing
- 61: Edge band
- 62: Full band
- CL: Tire center line

## Claims

1. A tire comprising
a tread part (1) comprising at least one rubber layer, and
a sidewall (32),
**characterized in that** each of the tread part (1) and the sidewall (32) is composed of a rubber composition comprising a rubber component and a vegetable oil,
wherein, when an average value of contents of the vegetable oil based on 100 parts by mass of the rubber component in a tread rubber constituting the tread part (1) is defined as S1, in part by mass, and a content of the vegetable oil based on 100 parts by mass of the rubber component in the rubber composition constituting the sidewall (32) is defined as S2, in part by mass, S1/S2 is greater than 1.0, preferably 1.1 or more, more preferably 1.3 or more, further preferably 1.6 or more and less than 10, and
wherein, when a complex elastic modulus at 30°C of a cap rubber layer (2) constituting a tread surface (5) is defined as 30°CE*_{C}, in MPa, and a complex elastic modulus at 70°C of the rubber composition constituting the sidewall (32) is defined as 70°CE*_{SW}, in MPa, 30°CE*_{C} - 70°CE*_{SW} is 3.0 MPa or less, preferably 2.7 MPa or less, more preferably 2.4 MPa or less, further preferably 2.1 MPa or less, particularly preferably 0.1 MPa or more and 1.8 MPa or less,
when the complex elastic modulus at 30°C is measured using a dynamic viscoelasticity measuring apparatus under a condition of a temperature at 30°C, a frequency of 10 Hz, an initial strain of 5%, a dynamic strain of 1%, and an extension mode and when the complex elastic modulus at 70°C is measured using a dynamic viscoelasticity measuring apparatus under a condition of a temperature at 70°C, a frequency of 10 Hz, an initial strain of 10%, a dynamic strain of 1%, and an extension mode.

2. The tire of claim 1, wherein S2 is 5.0 parts by mass or less.

3. The tire of claim 1 or 2, wherein, when tan δ at 30°C of the cap rubber layer (2) is defined as 30°C tan δ_{C}, 30°C tan δ_{C} is 0.13 or less, when measured using a dynamic viscoelasticity measuring apparatus under a condition of a temperature at 30°C, a frequency of 10 Hz, an initial strain of 5%, a dynamic strain of 1%, and an extension mode.

4. The tire of claim 3, wherein 30°C tan δ_{C} is 0.11 or less.

5. The tire of any one of claims 1 to 4, wherein, when tan δ at 70°C of the rubber composition constituting the sidewall (32) is defined as 70°C tan δ_{SW}, 70°C tan δ_{SW} is 0.06 or less, when measured using a dynamic viscoelasticity measuring apparatus under a condition of a temperature at 70°C, a frequency of 10 Hz, an initial strain of 10%, a dynamic strain of 1%, and an extension mode.

6. The tire of any one of claims 1 to 5, wherein 30°CE*_{C} is 5.0 MPa or more.

7. The tire of any one of claims 1 to 6, wherein, a glass transition temperature of the cap rubber layer (2) is -25°C or higher, when a temperature distribution curve of tan δ in a range from -60°C to 40°C is measured using a dynamic viscoelasticity measuring apparatus under a condition of a frequency of 10 Hz, an initial strain of 10%, an amplitude of ±0.5%, and a temperature rising rate of 2°C/min, and a temperature corresponding to the largest value of tan δ in the obtained temperature distribution curve, the tan δ peak temperature, is determined as glass transition temperature of the rubber composition.

8. The tire of any one of claims 1 to 7, wherein a Shore hardness (Hs) of the cap rubber layer (2) is 40 or more and 70 or less, preferably 40 or more and 60 or less, more preferably 40 or more and 55 or less, wherein the Hs is measured at 23°C in accordance with JIS K 6253-3:2012 using a type-A durometer.

9. The tire of any one of claims 1 to 8, wherein, when tan δ at 30°C of the cap rubber layer (2) is defined as 30°C tan δ_{C} and a total thickness of the tread part (1) is defined as t, in mm, a product (30°C tan δ_{C} × t) of 30°C tan δ_{C} and t is 1.50 or less, preferably 0.50 or more and 1.45 or less, when the tan δ at 30°C is measured using a dynamic viscoelasticity measuring apparatus under a condition of a temperature at 30°C, a frequency of 10 Hz, an initial strain of 5%, a dynamic strain of 1%, and an extension mode.

10. The tire of any one of claims 1 to 9, wherein a difference between an average value of amounts of acetone extraction for the tread rubber and an amount of acetone extraction for the rubber composition constituting the sidewall (32) is 5.0% by mass or more, when the amounts of acetone extraction are measured by immersing each vulcanized rubber test piece in acetone for 24 hours to extract a soluble component, a mass of each test piece before and after the extraction is measured, and an amount for acetone extraction is calculated using the following equation:
Amount of acetone extraction (% by mass) = {(mass of vulcanized rubber test piece before extraction - mass of vulcanized rubber test piece after extraction)/(mass of vulcanized rubber test piece before extraction)} × 100.

11. The tire of any one of claims 1 to 10, wherein an average value of ash contents of the tread rubber is 7.5% by mass or more, preferably 10% by mass or more, more preferably 13% by mass or more, further preferably 16% by mass or more, when the ash content is measured by putting a vulcanized rubber test piece in a crucible made of alumina, and heating in an electric furnace at 550°C for 4 ours, then an ash content (% by mass) is calculated by the following equation: (mass of test piece after heating /mass of test piece before heating) × 100.

12. The tire of any one of claims 1 to 11, wherein a total styrene amount in the rubber component constituting the cap rubber layer (2) is 3% by mass or more and 15% by mass or less.

13. The tire of any one of claims 1 to 12,
wherein the tread part (1) comprises a circumferential groove (3) continuously extending in a tire circumferential direction,
wherein a groove wall of at least one circumferential groove (3) has a recessed part (9) that is recessed outward in a groove width direction from a groove edge (6) appearing on a grounding face of the tread part (1), and
wherein a total amount of recession of the at least one circumferential groove (3) relative to a groove width of the at least one circumferential groove (3) is 0.10 to 0.90.

14. The tire of claim 13,
wherein a first groove wall (10) that is one groove wall of the circumferential groove (3) has a first recessed part (11) that is recessed outward in the groove width direction from a groove edge (6) appearing on the grounding face of the tread part (1), and
wherein an amount of recession of the first recessed part (11) from the groove edge (6) is gradually decreased toward both sides of the tire circumferential direction from the deepest part that is recessed most outward in the groove width direction.

15. The tire of claim 14, wherein the first groove wall (10) further has a second recessed part (12) that is recessed outward in the groove width direction from the groove edge (6) appearing on the grounding face of the tread part (1) and in which an amount of recession of the second recessed part (12) from the groove edge (6) being constant in the tire circumferential direction.

## Patentansprüche

1. Reifen, umfassend
einen Laufflächenteil (1), der mindestens eine Gummischicht umfasst, und
eine Seitenwand (32),
**dadurch gekennzeichnet, dass** sowohl der Laufflächenteil (1) als auch die Seitenwand (32) aus einer Kautschukmischung bestehen, die eine Kautschukkomponente und ein Pflanzenöl umfasst,
wobei, wenn ein Durchschnittswert der Gehalte des Pflanzenöls, bezogen auf 100 Massenteile der Kautschukkomponente in einem Laufflächenkautschuk, der den Laufflächenteil (1) bildet, als S1 definiert ist, in Massenteilen, und ein Gehalt des Pflanzenöls, bezogen auf 100 Massenteile der Kautschukkomponente in der Kautschukmischung, die die Seitenwand (32) bildet, als S2 definiert ist, in Massenteilen, S1/S2 größer als 1,0, vorzugsweise 1,1 oder mehr, bevorzugter 1,3 oder mehr, weiter bevorzugt 1,6 oder mehr und weniger als 10 ist, und
wobei, wenn ein komplexer Elastizitätsmodul bei 30°C einer Deckgummischicht (2), die eine Laufflächen-Oberfläche (5) bildet, als 30°CE*_{C} definiert ist, in MPa, und ein komplexer Elastizitätsmodul bei 70°C der Kautschukmischung, die die Seitenwand (32) bildet, als 70°CE*_{SW} definiert ist, in MPa, 30°CE*_{C} - 70°CE*_{SW} 3,0 MPa oder weniger, vorzugsweise 2,7 MPa oder weniger, bevorzugter 2,4 MPa oder weniger, weiter bevorzugt 2,1 MPa oder weniger, besonders bevorzugt 0,1 MPa oder mehr und 1,8 MPa oder weniger ist,
wenn der komplexe Elastizitätsmodul bei 30°C unter Verwendung einer Messvorrichtung für die dynamische Viskoelastizität unter einer Bedingung einer Temperatur bei 30°C, einer Frequenz von 10 Hz, einer Anfangsdehnung von 5%, einer dynamischen Dehnung von 1% und eines Dehnungsmodus gemessen wird, und wenn der komplexe Elastizitätsmodul bei 70°C unter Verwendung einer Messvorrichtung für die dynamische Viskoelastizität unter einer Bedingung einer Temperatur bei 70°C, einer Frequenz von 10 Hz, einer Anfangsdehnung von 10%, einer dynamischen Dehnung von 1% und eines Dehnungsmodus gemessen wird.

2. Reifen nach Anspruch 1, wobei S2 5,0 Massenteile oder weniger ist.

3. Reifen nach Anspruch 1 oder 2, wobei, wenn tan δ bei 30°C der Deckgummischicht (2) als 30°C tan δ_{C} definiert ist, 30°C tan δ_{C} 0,13 oder weniger ist, wenn unter Verwendung einer Messvorrichtung für die dynamische Viskoelastizität unter einer Bedingung einer Temperatur bei 30°C, einer Frequenz von 10 Hz, einer Anfangsdehnung von 5%, einer dynamischen Dehnung von 1% und eines Dehnungsmodus gemessen wird.

4. Reifen nach Anspruch 3, wobei 30°C tan δ_{C} 0,11 oder weniger ist.

5. Reifen nach einem der Ansprüche 1 bis 4, wobei, wenn tan δ bei 70°C der Kautschukmischung, die die Seitenwand (32) bildet, als 70°C tan δ_{SW} definiert ist, 70°C tan δ_{SW} 0,06 oder weniger ist, wenn unter Verwendung einer Messvorrichtung für die dynamische Viskoelastizität unter einer Bedingung einer Temperatur bei 70°C, einer Frequenz von 10 Hz, einer Anfangsdehnung von 10%, einer dynamischen Dehnung von 1% und eines Dehnungsmodus gemessen wird.

6. Reifen nach einem der Ansprüche 1 bis 5, wobei 30°CE*_{C} 5,0 MPa oder mehr ist.

7. Reifen nach einem der Ansprüche 1 bis 6, wobei eine Glasübergangstemperatur der Deckgummischicht (2) -25°C oder höher ist, wenn eine Temperaturverteilungskurve von tan δ in einem Bereich von -60°C bis 40°C unter Verwendung einer Messvorrichtung für die dynamische Viskoelastizität unter einer Bedingung einer Frequenz von 10 Hz, einer Anfangsdehnung von 10%, einer Amplitude von ±0,5% und einer Temperaturanstiegsrate von 2°C/min gemessen wird, und eine Temperatur, die dem größten Wert von tan δ in der erhaltenen Temperaturverteilungskurve, der tan δ-Spitzentemperatur, entspricht, als Glasübergangstemperatur der Kautschukmischung bestimmt wird.

8. Reifen nach einem der Ansprüche 1 bis 7, wobei eine Shore-Härte (Hs) der Deckgummischicht (2) 40 oder mehr und 70 oder weniger, vorzugsweise 40 oder mehr und 60 oder weniger, mehr bevorzugt 40 oder mehr und 55 oder weniger ist, wobei die Hs bei 23°C gemäß JIS K 6253-3:2012 unter Verwendung eines Durometers vom Typ A gemessen wird.

9. Reifen nach einem der Ansprüche 1 bis 8, wobei, wenn tan δ bei 30°C der Deckgummischicht (2) als 30°C tan δ_{C} definiert ist und eine Gesamtdicke des Laufflächenteils (1) als t definiert ist, in mm, ein Produkt (30°C tan δ_{C} × t) von 30°C tan δ_{C} und t 1,50 oder weniger, vorzugsweise 0,50 oder mehr und 1,45 oder weniger ist, wenn die tan δ bei 30°C unter Verwendung einer Messvorrichtung für die dynamische Viskoelastizität unter einer Bedingung einer Temperatur bei 30°C, einer Frequenz von 10 Hz, einer Anfangsdehnung von 5%, einer dynamischen Dehnung von 1% und eines Dehnungsmodus gemessen wird.

10. Reifen nach einem der Ansprüche 1 bis 9, wobei eine Differenz zwischen einem Durchschnittswert der Mengen der Acetonextraktion für den Laufflächengummi und einer Menge der Acetonextraktion für die Kautschukmischung, die die Seitenwand (32) bildet, 5,0 Massen-% oder mehr ist, wenn die Mengen der Acetonextraktion durch Eintauchen jedes vulkanisierten Kautschukteststücks in Aceton für 24 Stunden zum Extrahieren einer löslichen Komponente gemessen werden, eine Masse jedes Teststücks vor und nach der Extraktion gemessen wird und eine Menge für die Acetonextraktion unter Verwendung der folgenden Gleichung berechnet wird:
Menge der Acetonextraktion (Massen-%) = {(Masse des vulkanisierten Kautschukteststücks vor der Extraktion - Masse des vulkanisierten Kautschukteststücks nach der Extraktion)/(Masse des vulkanisierten Kautschukteststücks vor der Extraktion)} × 100.

11. Reifen nach einem der Ansprüche 1 bis 10, wobei ein Durchschnittswert der Aschegehalte des Laufflächengummis 7,5 Massen-% oder mehr, vorzugsweise 10 Massen-% oder mehr, bevorzugter 13 Massen-% oder mehr, weiter bevorzugt 16 Massen-% oder mehr ist, wenn der Aschegehalt durch Einsetzen eines vulkanisierten Kautschukteststücks in einen Tiegel aus Aluminiumoxid und Erhitzen in einem Elektroofen bei 550°C für 4 Stunden gemessen wird, dann ein Aschegehalt (Massen-%) durch die folgende Gleichung berechnet wird: (Masse des Teststücks nach dem Erhitzen / Masse des Teststücks vor dem Erhitzen) × 100.

12. Reifen nach einem der Ansprüche 1 bis 11, wobei eine Gesamtstyrolmenge in der Kautschukkomponente, die die Deckgummischicht (2) bildet, 3 Massen-% oder mehr und 15 Massen-% oder weniger ist.

13. Reifen nach einem der Ansprüche 1 bis 12,
wobei der Laufflächenteil (1) eine Umfangsrille (3) umfasst, die sich kontinuierlich in einer Reifenumfangsrichtung erstreckt,
wobei eine Rillenwand von mindestens einer Umfangsrille (3) einen vertieften Teil (9) aufweist, der in einer Rillenbreitenrichtung von einer Rillenkante (6), die an einer Bodenoberfläche des Laufflächenteils (1) erscheint, nach außen hin vertieft ist, und
wobei ein Gesamtbetrag der Vertiefung der mindestens einen Umfangsrille (3) relativ zu einer Rillenbreite der mindestens einen Umfangsrille (3) 0,10 bis 0,90 ist.

14. Reifen nach Anspruch 13,
wobei eine erste Rillenwand (10), die eine Rillenwand der Umfangsrille (3) ist, einen ersten vertieften Teil (11) aufweist, der in der Rillenbreitenrichtung von einer Rillenkante (6), die an der Bodenoberfläche des Laufflächenteils (1) erscheint, nach außen hin vertieft ist, und
wobei ein Betrag der Vertiefung des ersten vertieften Teils (11) von der Rillenkante (6) zu beiden Seiten der Reifenumfangsrichtung hin von dem tiefsten Teil aus, der am weitesten nach außen in der Rillenbreitenrichtung vertieft ist, allmählich abnimmt.

15. Reifen nach Anspruch 14, wobei die erste Rillenwand (10) ferner einen zweiten vertieften Teil (12) aufweist, der in der Rillenbreitenrichtung von der Rillenkante (6), die auf der Bodenoberfläche des Laufflächenteils (1) erscheint, nach außen hin vertieft ist und in dem ein Betrag der Vertiefung des zweiten vertieften Teils (12) von der Rillenkante (6) in der Reifenumfangsrichtung konstant ist.

## Revendications

1. Pneumatique comprenant
une partie bande de roulement (1) comprenant au moins une couche de caoutchouc et une paroi latérale (32),
**caractérisé en ce que** chacune parmi la partie bande de roulement (1) et la paroi latérale (32) est composée d'une composition de caoutchouc comprenant un composant de caoutchouc et une huile végétale,
dans lequel, lorsqu'une valeur moyenne des teneurs en huile végétale sur la base de 100 parties en masse de composant de caoutchouc dans un caoutchouc de bande de roulement constituant la partie bande de roulement (1) est définie par S1, en partie en masse, et une teneur en huile végétale sur la base de 100 parties en masse de composant de caoutchouc dans la composition de caoutchouc constituant la paroi latérale (32) est définie par S2, en partie en masse, S1/S2 est supérieur à 1,0, préférentiellement à 1,1 ou plus, plus préférentiellement à 1,3 ou plus, encore plus préférentiellement à 1,6 ou plus, et inférieur à 10, et
dans lequel, lorsqu'un module élastique complexe à 30 °C d'une couche de caoutchouc de revêtement (2) constituant une surface de bande de roulement (5) est défini par E_{c}* à 30 °C, en MPa, et un module élastique complexe à 70 °C de la composition de caoutchouc constituant la paroi latérale (32) est défini par E*_{sw} à 70 °C, en MPa, E*_{c} à 30°C - E*_{sw} à 70°C est inférieur ou égal à 3,0 MPa, préférentiellement inférieur ou égal à 2,7 MPa, plus préférentiellement inférieur ou égal à 2,4 MPa, encore plus préférentiellement inférieur ou égal à 2,1 MPa, particulièrement préférentiellement égal ou supérieur à 0,1 MPa et inférieur ou égal à 1,8 MPa,
lorsque le module élastique complexe à 30 °C est mesuré en utilisant un appareil de mesure de viscoélasticité dynamique dans des conditions de température de 30 °C, de fréquence de 10 Hz, de contrainte initiale de 5 %, de contrainte dynamique de 1 %, et en mode extension, et lorsque le module élastique complexe à 70 °C est mesuré en utilisant un appareil de mesure de viscoélasticité dynamique dans des conditions de température de 70 °C, de fréquence de 10 Hz, de contrainte initiale de 10 %, de contrainte dynamique de 1 %, et en mode extension.

2. Pneumatique selon la revendication 1, dans lequel S2 est inférieur ou égal à 5,0 parties en masse.

3. Pneumatique selon la revendication 1 ou la revendication 2, dans lequel, lorsque tan δ à 30 °C de la couche de caoutchouc de revêtement (2) est définie par tan δ_{c} à 30° C, tan δ_{c} à 30° C est inférieure ou égale à 0,13 lorsqu'elle est mesurée en utilisant un appareil de mesure de viscoélasticité dynamique dans des conditions de température de 30 °C, de fréquence de 10 Hz, de contrainte initiale de 5 %, de contrainte dynamique de 1 %, et en mode extension.

4. Pneumatique selon la revendication 3, dans lequel tan δ_{c} à 30 °C est inférieure ou égale à 0,11.

5. Pneumatique selon l'une quelconque des revendications 1 à 4, dans lequel, lorsque tan δ à 70 °C de la composition de caoutchouc constituant la paroi latérale (32) est définie par tan δ_{sw} à 70 °C, tan δ_{sw} à 70 °C est inférieure ou égale à 0,06, lorsqu'elle est mesurée en utilisant un appareil de mesure de viscoélasticité dynamique dans des conditions de température de 70 °C, de fréquence de 10 Hz, de contrainte initiale de 10 %, de contrainte dynamique de 1 %, et en mode extension.

6. Pneumatique selon l'une quelconque des revendications 1 à 5, dans lequel E*_{c} à 30 °C est égal ou supérieur à 5,0 MPa.

7. Pneumatique selon l'une quelconque des revendications 1 à 6, dans lequel, la température de transition vitreuse de la couche de caoutchouc de revêtement (2) est de -25 °C ou plus, lorsque la courbe de distribution de températures de tan δ dans une plage de -60 °C à 40 °C est mesurée en utilisant un appareil de mesure de viscoélasticité dynamique dans des conditions de fréquence de 10 Hz, de contrainte initiale de 10 %, d'une amplitude de ± 0,5 %, et un gradient de température de 2 °C/min, et une température correspondant à la valeur la plus élevée de tan δ dans la courbe de distribution de températures obtenue, la température du pic de tan δ est déterminée en tant que température de transition vitreuse de la composition de caoutchouc.

8. Pneumatique selon l'une quelconque des revendications 1 à 7, dans lequel la dureté Shore (Hs) de la couche de caoutchouc de revêtement (2) est égale ou supérieure à 40 et inférieure ou égale à 70, préférentiellement égale ou supérieure à 40 et inférieure ou égale à 60, plus préférentiellement égale ou supérieure à 40 et inférieure ou égale à 55, dans lequel la Hs est mesurée à 23 °C selon la norme JIS K 6253-3:2012 en utilisant un duromètre de type A.

9. Pneumatique selon l'une quelconque des revendications 1 à 8, dans lequel, lorsque tan δ à 30 °C de la couche de caoutchouc de revêtement (2) est définie par tan δ_{c} à 30 °C et une épaisseur totale de la partie bande de roulement (1) est définie par t, en mm, le produit (tan δ_{c} à 30 °C × t) de la tan δ_{c} à 30°C par t est inférieur ou égal à 1,50, préférentiellement égal ou supérieur à 0,50 et inférieur ou égal à 1,45, lorsque la tan δ à 30 °C est mesurée en utilisant un appareil de mesure de viscoélasticité dynamique dans des conditions de température de 30 °C, de fréquence de 10 z, de contrainte initiale de 5 %, de contrainte dynamique de 1 %, et en mode extension.

10. Pneumatique selon l'une quelconque des revendications 1 à 9, dans lequel la différence entre une valeur moyenne de quantités extraites à l'acétone pour le caoutchouc de bande de roulement et une quantité extraite à l'acétone pour la composition de caoutchouc constituant la paroi latérale (32) est égale ou supérieure à 5,0 % en masse, lorsque les quantités extraites à l'acétone sont mesurées en immergeant chaque échantillon de test de caoutchouc vulcanisé dans de l'acétone pendant 24 heures pour extraire un composant soluble, une masse de chaque échantillon de test est mesurée avant et après la mesure d'extraction et une quantité extraite à l'acétone est calculée en utilisant l'équation suivante : Quantité extraite à l'acétone (% en masse) = {(masse de l'échantillon de test de caoutchouc vulcanisé avant l'extraction - {(masse de l'échantillon de test de caoutchouc vulcanisé après l'extraction)/({(masse de l'échantillon de test de caoutchouc vulcanisé avant l'extraction)} × 100.

11. Pneumatique selon l'une quelconque des revendications 1 à 10, dans lequel une valeur moyenne de teneurs en cendres du caoutchouc de bande de roulement est égale ou supérieure à 7,5 % en masse, préférentiellement égale ou supérieure à10 % en masse, plus préférentiellement égale ou supérieure à 13 % en masse, encore plus préférentiellement égale ou supérieure à 16 % en masse, lorsque la teneur en cendres est mesurée en mettant l'échantillon de test de caoutchouc vulcanisé dans un creuset fait en alumine, et en chauffant dans un four électrique à 550 °C pendant 4 heures, alors la teneur en cendres (% en masse) est calculée par l'équation suivante : (masse de l'échantillon de test après le chauffage /masse de l'échantillon de test avant le chauffage) × 100.

12. Pneumatique selon l'une quelconque des revendications 1 à 11, dans lequel une quantité totale de styrène dans le composant de caoutchouc constituant la couche de caoutchouc de revêtement (2) est égale ou supérieure à 3 % en masse et inférieure ou égale à 15 % en masse.

13. Pneumatique selon l'une quelconque des revendications 1 à 12,
dans lequel la partie bande de roulement (1) comprend une rainure circonférentielle (3) s'étendant en continu dans une direction circonférentielle de pneumatique,
dans lequel une paroi de rainure d'au moins une rainure circonférentielle (3) a une partie en retrait (9) qui est en retrait à l'extérieur dans une direction de largeur de rainure à partir d'un bord de rainure (6) apparaissant sur une face au sol de la partie bande de roulement (1), et
dans lequel une amplitude totale du retrait de l'au moins une rainure circonférentielle (3) par rapport à une largeur de rainure de l'au moins une rainure circonférentielle (3) est de 0,10 à 0,90.

14. Pneumatique selon la revendication 13,
dans lequel une première paroi de rainure (10), qui est l'une parmi la paroi de rainure de la rainure circonférentielle (3), a une première partie en retrait (11) qui est en retrait à l'extérieur dans la direction de la largeur de rainure à partir d'un bord de rainure (6) apparaissant sur la face au sol de la partie bande de roulement (1), et
dans lequel une amplitude du retrait de la première partie en retrait (11) à partir du bord de rainure (6) est diminuée graduellement vers les deux côtés de la direction circonférentielle du pneumatique à partir de la partie la plus profonde qui est en retrait le plus à l'extérieur dans la direction de la largeur de rainure.

15. Pneumatique selon la revendication 14, dans lequel la première paroi de rainure (10) a en outre une deuxième partie en retrait (12) qui est retrait à l'extérieur dans la direction de la largeur de la rainure à partir du bord de rainure (6) apparaissant sur la face au sol de la partie bande de roulement (1) et dans laquelle une amplitude du retrait de la deuxième partie en retrait (12) à partir du bord de rainure (6) étant constante dans la direction circonférentielle de pneumatique.
